# EUROPÄISCHE PATENTSCHRIFT

(11) **EP 4 212 866 B1**
(45) Veröffentlichungstag und Bekanntmachung des Hinweises auf die Patenterteilung: **08.05.2024**
(21) Anmeldenummer: 23150033.1
(22) Anmeldetag: 02.01.2023
(51) Int. Cl.: G01N 27/622

(54) **DESORBER FÜR EIN SPEKTROMETER**
DESORBER FOR SPECTROMETER
DIFFUSEUR POUR SPECTROMÈTRE

(30) Priorität: 13.01.2022 DE 102022100728
(43) Veröffentlichungstag der Anmeldung: 19.07.2023
(73) Patentinhaber: Bruker Optics GmbH & Co. KG, 76275 Ettlingen (DE)
(72) Erfinder: Renner, Uwe, 04105 Leipzig (DE)
(74) Vertreter: Gulde & Partner

(56) Entgegenhaltungen:
- JP-A- H09 243 536
- US-A1- 2016 233 068
- US-A1- 2019 195 899

## Beschreibung

Die Erfindung betrifft einen Desorber für ein Spektrometer, insbesondere für ein lonenmobilitätsspektrometer, der ein Gehäuse, das Zu- und Ableitungen für ein Probenträgergas sowie eine verschließbare Öffnung aufweist, und eine in dem Gehäuse angeordnete Induktionseinheit umfasst, sowie ein lonenmobilitätsspektrometer mit einem solchen Desorber und ein Verfahren zur Desorption mittel- und schwerflüchtiger Substanzen bei hohen Temperaturen und Bereitstellung der desorbierten Substanzen in einem lonenmobilitätsspektrometer mit einem Desorber gemäß dem Oberbegriff der unabhängigen Patentansprüche.

Zur Untersuchung von Substanzen in einem Spektrometer, insbesondere in einem lonenmobilitätsspektrometer müssen mittel- und insbesondere schwerflüchtige Substanzen von einem Probenträger in kurzer Zeit und mit minimalem Energieverbrauch kontrolliert in die Gasphase gebracht werden. Dazu ist die Erzeugung hoher Temperatur notwendig.

Die Desorption bzw. Ablösung einer Substanz von der Oberfläche eines Probenträgers, das heißt die Überführung von einem flüssigen in den gasförmigen Zustand (Verdampfung) bzw. von einem festen in den gasförmigen Zustand (Sublimation) wird substanzabhängig durch die Verdampfungsenthalpie bzw. Sublimationsenthalpie bestimmt. Der freigesetzte gasförmige Substanzanteil, der sich nachfolgend im Probenträgergas anreichert und üblicherweise durch den partiellen Dampfdruck charakterisiert wird, ist in vielen Fällen analog der Arrhenius-Gleichung in exponentieller Weise von der Temperatur abhängig. In dieser bestimmt die Aktivierungsenergie die Reaktionsgeschwindigkeit ebenfalls in Abhängigkeit von der Temperatur. Dementsprechend unterscheidet man mehr oder weniger schwer flüchtige Substanzen. Obwohl bei einer Detektion die meist unbekannten Substanzen ein sehr unterschiedliches Desorptionsverhalten aufweisen, wird die Desorption meist mangels geeigneter Vorrichtungen bei einer festen Temperatur als Kompromiss durchgeführt.

Häufig werden auch lediglich Salze mit niedriger Desorptionstemperatur wie Ammoniumnitrat und Harnstoffnitrat mit lonenmobilitätsspektrometern nachgewiesen. Diese können durch Desorber verdampft oder sublimiert werden, die bei niedrigen Betriebstemperaturen arbeiten, da die genannten Stoffe bei Temperaturen unter 250°C desorbieren.

Die Erzeugung höherer Temperaturen zur Anwendung in lonenmobilitätsspektrometern erfordert hingegen einen hohen Aufwand zur Wärmeisolation. Wegen der großen Masse des Desorbers, insbesondere der Wandung mitsamt der Isolation ist darüber hinaus ein zeitaufwendiges Vorheizen nötig, bis die erforderliche Temperatur erreicht wird. Nachteilig ist weiterhin, dass die Betriebsbereitschaft nach einer längeren Wartezeit oftmals erst nach mehreren Minuten hergestellt werden kann. Dies wird durch höhere, angestrebte Temperaturen verstärkt. Insbesondere in mobilen Anwendungen mit begrenzten Energiekapazitäten beschränkt eine notwendige kontinuierliche Heizung die Dauer der Betriebsbereitschaft. Durch die träge Reaktion auf die Regelgrößen wie Spannung oder Stromstärke ist eine stufenweise oder profilgesteuerte temperaturabhänge Desorption nur zeitlich verzögert möglich.

Die Erfindung bezieht sich auf den Nachweis mittel- und schwerflüchtiger Substanzen in Spektrometern, insbesondere lonenmobilitätsspektrometern, insbesondere Salze mit hoher Sublimationsenthalpie. Um einen nachweisbaren Dampfdruck bzw. entsprechend der Gaszustandsgleichung eine ausreichende Konzentration zu erreichen, ist hierfür eine hohe Temperatur erforderlich. Die Temperatur darf jedoch nicht zu groß werden, da ansonsten chemische Umwandlungsprozesse z. B. mit in dem Probenträgergas vorhandenen Sauerstoff stattfinden können, die im ungünstigsten Fall zu weniger spezifischen Produkten führen können. Für eine bekannte Substanz kann daher eine optimale Desorptionstemperatur angegeben werden. In vielen Fällen, so in Detektionsanwendungen mit der Suche nachweisbarer Substanzen, kann es daher von Vorteil sein, die Temperatur gezielt und zeitgesteuert zu erhöhen, womit eine Trennung der Substanzen je nach Sublimationsenthalpie erreicht wird, so dass diese Substanzklassen chromatographisch untersucht werden können. Wegen der großen Masse bzw. Wärmekapazität der meisten Desorber lässt sich die Temperatur nur stark zeitverzögert einstellen und insbesondere sehr langsam auf einen Startwert abkühlen.

Die Probe gelangt üblicherweise durch Wischen oder Pipettieren auf einen Probenträger, der zumeist eine Streifenform aufweist. Die Zufuhr des Probenträgers erfolgt durch Hineinstecken in eine oftmals schlitzförmige Öffnung, die sich auch verschließen lässt. Der Streifen besteht hierfür aus hitzebeständigen Materialien wie speziellem Papier oder einer Komposit-Verbindung aus Teflon und Glasfasern. Materialbedingt lassen solche Probenträger ohne Schädigungen kaum höhere Temperaturen als ca. 250°C in Dauerbenutzung zu.

Das direkte Erhitzen des Probestreifens erfolgt dann gemäß Stand der Technik durch den Presskontakt mit einer flächigen Wärmequelle. Die eigentliche Heizung ist direkt mit der Heizfläche verbunden. Bei Flächenheizern ist es aber unvermeidbar, dass neben der nutzbaren Kontaktheizfläche zur Übertragung der Wärme an den Probenträger eine zumindest gleichgroße nicht nutzbare Fläche miterhitzt wird, deren Wärme ungenutzt an die Umgebung abgegeben werden muss, woraus ein geringer energetischer Wirkungsgrad resultiert. Die desorbierte Probe gelangt über einen Trägergasstrom in das lonenmobilitätsspektrometer.

Für die Überführung der Substanz in einen Probenträgergasstrom ist die oberflächennahe Diffusion und der lokale konvektive Transport ein weiterer wesentlicher Faktor, denn die Gasgeschwindigkeit des vorbeiführenden Probegasstroms ist infolge der Oberflächenhaftung null, wobei neben der Rauigkeit die Temperatur der oberflächennahen Schicht wesentlich ist. Bei höheren Temperaturen bewegen sich die Gasmoleküle schneller von der Wärmequelle weg und gelangen somit in den Probengasstrom, mit dem sie sich vermischen. Durch die geringen Betriebstemperaturen der üblichen Desorber ist die Vermischung demzufolge auch nicht zufriedenstellend.

Weiter werden Drähte oder dünne Keramikheizer direkt als Probenträger verwendet. Diese müssen nach jedem Einführen mit einer Stromversorgung über Kontakte verbunden und nach dem Entfernen von den Kontakten getrennt werden. Nachteilig hierbei sind die mögliche Abnutzung und Verunreinigung der Kontakte, welche entsprechend z. B. mit Gold vergütet werden müssten. Um einen geringe Wärmekapazität zu erreichen, müsste der Keramikheizer sehr dünn sein, wodurch dieser bruchempfindlich wird.

Heizelemente samt Befestigung, z. B. an einer Gehäusewand, sind häufig massiv aufgebaut und müssen selbst erhitzt werden, wofür je nach Wärmekapazität des Heizkörpers eine Initialenergie benötigt wird. In Verbindung mit den zuvor erwähnten Verlusten rufen diese eine Verzögerung bis zur Erreichung der gewünschten Einsatztemperatur wie der Kontakttemperatur bzw. der Betriebsbereitschaft hervor. Die elektrischen (metallischen) Zuleitungen zur Wärmequelle gehören außerdem gleichfalls zu den Verlustelementen. Denn durch diese fließt zur Erreichung der nötigen Heizleistung ein hoher elektrischer Strom, aber wegen der hohen elektrischen Leitfähigkeit zur Vermeidung der Zuleitungsverluste fließt durch die hohe Wärmeleitfähigkeit eine hoher Verlustwärmestrom von der Wärmequelle ab.

Eine weitere in US2012199735 AA und EP2671244 B1 beschriebene Möglichkeit zur Erzeugung hoher Temperatur zum Desorbieren der Probe besteht in der Verwendung eines Drahtgitters als Probenträger, welches durch einen elektrischen Strom durchflossen wird. Die Probe wird hier durch einen Gasstrom zum lonenmobilitätsspektrometer transportiert. Da hier eine direkte Heizung durch die stromdurchflossenen Drähte erfolgt, erfolgt gleichfalls über die Stromversorgungsdrähte eine Wärmeverluststrom in die Umgebung.

WO 2015/040419 A1 beschreibt ein Spektrometer, das eine Spule umfasst, die ein Heizelement erhitzt. Das Heizelement wiederum erwärmt einen Probensammler, auf dem sich eine zu desorbierende Probe befindet.

Ein induktiver Heizer umfasst grundsätzlich eine Induktionsquelle, bestehend aus einer Spule, in welcher durch einen Wechselstrom ein zeitlich veränderliches Magnetfeld bzw. ein zeitlich veränderlicher magnetischer Fluss erzeugt wird, und einer Quelle aus metallischem Material, durch welche der magnetische Fluss als magnetischer Wirbel über Magnetfeldleiter zurück zur Induktionsquelle fließt. Die Spule wird aus der Gesamtheit der Windungen aus Draht oder Litze gebildet, die zum magnetischen Fluss durch das Quellenmaterial beitragen. Senkrecht zum magnetischen Wirbelfeld wird das elektrische Stromwirbelfeld j induziert. Die ohmsche Verlustleistung P bestimmt sich aus dem Volumenintegral des Produktes gebildet aus dem spezifischen Widerstand und dem Betragsquadrat des Vektorfeldes der elektrischen Stromdichte j im betreffenden Material. Mit einer hohen Stromdichte und infolge des elektrischen Widerstandes wird die gewünschte Verlustwärme zum Erhitzen der Quelle erzeugt.

Der Erfindung liegt nun die Aufgabe zugrunde, eine Vorrichtung und ein entsprechendes Verfahren bereitzustellen, die die genannten Nachteile des Stands der Technik zumindest teilweise überwinden und Stoffe mit hoher Desorptionstemperatur für einen Nachweis durch ein Spektrometer, insbesondere ein lonenmobilitätsspektrometer, in kurzer Zeit bei geringem Energieverbrauch bzw. hohem energetischen Wirkungsgrad in desorbiertem Zustand bereitstellen. Bei derartigen Substanzen handelt es sich beispielsweise um bei hohen Temperaturen zu desorbierende Stoffe wie Salze, insbesondere solche Salze, die als Oxidationsmittel beim Zünden (Zündstoffe) von Sprengstoffen oder Feuerwerkskörper eingesetzt werden. Beispiele für Salze, die eine höhere Desorptionstemperatur erfordern, sind Manganate wie Kaliumpermanganat, Nitrate wie Kaliumnitrat und viele Sulfate und Chromate. Neben dem Nachweis von Gefahrstoffen im Sicherheitsbereich sollen weitere analytische Anwendungsgebiete etwa im Umweltbereich zum Nachweis von Schwermetallverbindungen durch die lonenmobilitätsspektrometrie erschlossen werden.

Da man des Weiteren bei der Probenentnahme und -untersuchung häufig mit einer unbekannten Vielfalt von Substanzen rechnet und diese dementsprechend auch bei unterschiedlich hohen Temperaturen desorbieren, ist eine breite und schnelle Temperaturregelung erforderlich, die verschiedene Temperaturen in kurzer Zeit realisiert. Insbesondere können dadurch in kurzer Zeit Substanzen gezielt in die Gasphase gebracht und mit einem Probenträgergasstrom dem lonenmobilitätsspektrometer zu oder -abgeführt werden.

Diese Aufgabe wird durch einen Desorber sowie ein entsprechendes Verfahren mit den Merkmalen der unabhängigen Ansprüche gelöst. Vorteilhafte Ausgestaltungen der Erfindung sind in den Unteransprüchen definiert. Dafür werden Anordnungen zur Desorption mittel- und schwerflüchtiger Substanzen bei hohen Temperaturen von einem elektrisch leitfähigen, metallischen Probenträger hoher relativer Permeabilität mit einem Wert von über 100 und geringer Wärmekapazität von bevorzugt weniger als 10 J/K in Form eines Desorbers mit induktiver Heizung beschrieben. Eine derartige Wärmekapazität wird durch eine geringes Volumen und insbesondere durch eine geringe Wandstärke des Probenträgers erreicht. Dadurch ist eine schnelle Änderung der Desorptionstemperatur möglich. Die dazu nötige Wärme und Temperaturniveaus sollen ferner durch eine Optimierung des Desorbers und des Probenträgers erreicht werden.

Erfindungsgemäß wird ein Desorber für ein Spektrometer, insbesondere für ein lonenmobilitätsspektrometer, bereitgestellt, der ein im Wesentlichen geschlossenes Gehäuse, das Zu- und Ableitungen für ein Probenträgergas sowie eine verschließbare Öffnung aufweist, und eine in dem Gehäuse angeordnete Induktionseinheit umfasst. Die Induktionseinheit umfasst einen hochpermeablen und elektrisch schlecht leitenden, bevorzugt elektrisch isolierenden, Spulenträger. Der Spulenträger weist insbesondere eine elektrische Leitfähigkeit kleiner als 1000 S/m, bevorzugt kleiner als 100 S/m und besonders bevorzugt kleiner als 1 S/m auf. In dem Spulenträger ist eine Spule angeordnet. Weiter umfasst die Induktionseinheit einen über die verschließbare Öffnung entnehmbaren hochpermeablen Probenträger, wobei der Probenträger als induktives Heizelement ausgebildet ist, um eine auf den Probenträger aufgebrachte, zu desorbierende Substanz zu erhitzen. Der Spulenträger und die Spule sind durch einen Spalt von dem Probenträger beabstandet. Der Probenträger ist so angeordnet, dass ein magnetischer Fluss, der durch einen in der Spule fließenden Wechselstrom erzeugt wird, über den Spulenträger und den Spalt durch den Probenträger fließt. Der entnehmbare Probenträger dient der Aufnahme und dem Transfer der nachzuweisenden Substanzen in den Innenraum des Desorbers.

Unter dem Begriff "Spule" soll hinsichtlich der grundsätzlichen Erfindung nicht zwingend die Assoziation zu einer simplen Drahtspule aufkommen. Es kann sich bei der erfindungsgemäßen Spule um eine solche handeln, ist dabei aber keineswegs auf diese beschränkt, wie auch die nachfolgenden Erläuterungen und Ausführungen deutlich machen. So umfasst der Begriff "Spule" hier ebenfalls den Raum bzw. das Volumen, der bzw. das durch eine wie auch immer konkret gewickelte Spule ausgefüllt wird. Allgemein sind Spulen Spiralen, die sowohl einlagig als reine Zylinderspule entlang einer Zylinderachse zumeist mit einheitlichen Innendurchmesser gewickelt sind oder mehrlagig übereinander geschichtet sind. Auch die in einer Ebene ausgerollte mehrlagige Spirale (z.B. archimedische Spirale) kann man dazu rechnen. So können durch die erfindungsgemäße Spule unterschiedliche Geometrien ausgebildet werden wie beispielsweise im Falle einer Zylinderspule, einer toroidal geformten Zylinderspule oder archimedischen, spiralförmigen Spule.

Hinsichtlich des Feldverlaufes des magnetischen Feldes ist bevorzugt vorgesehen, dass die relative Anordnung von Spule, Spulenträger und Probenträger derart ausgebildet ist, dass der von der Spule erzeugte magnetische Fluss den Probenkörper vollständig so durchfließt, dass in dem Probenträger senkrecht zum magnetischen Fluss ein elektrischer Wirbelstrom erzeugt wird, und durch den vom Probenträger in der äußeren Hautschicht vorliegenden elektrischen Widerstand Verlustwärme erzeugt wird. Dazu muss der magnetisch Fluss, der idealerweise geschlossen zur Spule zurückfließt, zum Probenträger und vom Probenträger über einen schmalen Spalt zu- bzw. von diesem abgeleitet werden.

Bevorzugt umfasst der Desorber eine elektronische Steuer- und Regeleinheit, die unter anderem der Steuerung der induktiven Erwärmung durch Variation des Wechselstroms des Probenträgers und somit der Probe dient. Die induktive Erwärmung des Probenträges erfolgt in bevorzugter Weise durch die elektronische Steuer- und Regeleinheit geregelt und kann sowohl sprunghaft in kurzer Zeit, stufenweise oder nach einem vorgegebenen Zeitprofil bis zu einer Endtemperatur erfolgen. In vorteilhafter Weise wird ein Ziel-Temperaturprofil definiert, wobei das Temperaturprofil den idealen bzw. gewünschten Temperaturverlauf des Probenträgers charakterisiert und die elektronische Steuer- und Regeleinheit steuert die die induktive Erwärmung derart, dass dieses Temperaturprofil realisiert wird durch Erwärmung des Probenträgers. Hierdurch wird bei einer unbekannten Substanz vorteilhaft ein breiter Temperaturbereich realisiert und es erfolgt so ein verbesserter Nachweis, da auch unterschiedliche Substanzen desorbiert werden. Bevorzugt umfasst die elektronische Steuer- und Regeleinheit einen Stromsensor, z. B. einen Strommesswiderstand (Shunt) zur Messung der Stromstärke durch die Spule und/oder eine Sensorspule, die zur Messung des von der Spule erzeugten magnetisches Flusses ausgebildet ist. In Abhängigkeit der Messwerte des Stromsensors und/oder der Sensorspule lässt sich die Stromstärke des durch die Spule fließenden Stroms durch eine regelbare Strom- bzw. Spannungsquelle sowie die Frequenz f der Ansteuerung, z. B. des Wechselschalter, einstellen.

Bevorzugt umfasst der Desorber auch eine Sensorik, die ausgebildet ist, einen Probenträger im Desorber zu erkennen und den Desorptionsprozess zu beginnen, wenn sich der Probenträger im Innenraum des Desorbers befindet.

Zum Anschluss in einem lonenmobilitätsspektrometer besitzt die Einheit entsprechende Zu- und Ableitungen für den Probenträgergasstrom. In vorteilhafter Ausführung umfassen diese die elektronische Steuer- und Regeleinheit und, im Falle einer Temperaturmessung des Probenträgers, zusätzlich eingesetzte Sensoren.

Ferner bevorzugt weist der Spulenträger eine minimale Querschnittsfläche zum Ein- und Auskoppeln des magnetischen Flusses auf, wobei die Querschnittsfläche bevorzugt weniger als 50 % der Probenträgerfläche, die der Anordnung aus Spulenträger und Spule zugewandt ist, beträgt die Wärmeleitung über den Spalt ist proportional zur minimalen Querschnittsfläche und somit ist in dieser Ausführungsform vorteilhaft eine minimale Wärmeleitung gewährleistet.

Unter hochpermeablen Materialien versteht man ferromagnetische Stoffe, deren Permeabilitätszahlen (relative Permeabilität) größer als 10, bevorzugt größer als 100, und besonders bevorzugt größer als 1000 sind.

Der hochpermeable Probenträger ermöglicht im Gegensatz zu üblichen Probenträgern aus speziellem Papier oder einer Komposit-Verbindung aus Teflon und Glasfasern viel höhere Temperaturen als z. B. 250 °C, die bis zu z. B. 700 °C betragen können. Erst oberhalb der Curie-Temperatur verliert ein hochpermeabler Probenträger seine vorteilhaften magnetischen Eigenschaften. In ferromagnetischen Materialien kommen neben den zum Heizen hauptsächlich ausgenutzten ohmschen Verlusten zusätzlich die in magnetischen Wechselfeldern durch magnetische Umlagerungen (Hysterese) hervorgerufenen Verluste als Wärmequelle hinzu.

Ohne eine äußere Schicht wird der Probenträger nur durch einen Kern gebildet. Ein Schutz vor Mechanismen wie Oxidation liegt in diesem Fall nicht vor. Dies Ausführung eignet sich dann insbesondere für Anwendungsfälle, bei denen der Probenträger als Wegwerfartikel eingesetzte wird oder anschließend für eine Wiederverwendung regeneriert wird.

Bevorzugt umfasst der Probenträger einen Kern, der von einer äußeren Schicht, die die Oberfläche des Probenträgers bildet, umgeben wird. Der Kern des Probenträgers besteht bevorzugt aus einem metallischen Material mit einer elektrischen Leitfähigkeit von mehr als 1·10⁶ S/m, bevorzugt mehr als 5·10⁶ S/m und besonders bevorzugt mehr als 10·10⁶ S/m und einer magnetischen Permeabilität von mehr als 10, bevorzugt mehr als 100 und besonders bevorzugt mehr als 1000. Beispielhaft bevorzugt besteht der Kern aus Eisen, Nickel und Kobalt oder Legierungen davon. Viele Legierungen aus Eisen, Nickel und Kobalt besitzen zum Teil noch höhere relative Permeabilitätswerte bei vergleichsweise hoher elektrischer Leitfähigkeit und werden gleichfalls bevorzugt. Zudem erfüllen viele unlegierte Standardstahlsorten, d. h. Stahl ohne Kohlenstoffbeimischung wie Federbandstahl die Anforderung nach einer hohen Permeabilität und hohen elektrischen Leitfähigkeit und werden als Kernmaterial ebenfalls bevorzugt. Da der wesentliche Teil des Probenträgers, der Kern, aus diesem Material besteht, erfolgt der magnetische Fluss durch den Probenträger und der induzierte elektrische Wirbelfluss in einer dünnen oberflächennahen Schicht, die infolge des Skin-Effekts durch die Eindringtiefe als charakterisierendes Maß gegeben ist. Da hierin die ohmsche Verlustleistung zu einem großen Anteil produziert wird, kann die Dicke des Probenträgers bei den hohen Frequenzen auf einige Mikrometer reduziert werden. Die Größenordnung hierfür liegt im Bereich um 10 µm Dicke bei einer Frequenz von etwa 120 kHz. Der Probenträger lässt sich dann aus dünnen Blechen oder Folien fertigen. Beispielsweise erhält man bei einer Frequenz von 50 kHz für Kupfer eine Endringtiefe des magnetischen Wechselfeldes von ca. 295 µm, für reines Eisen hingegen von ca. 11 µm und für reines Nickel ca. 22 µm. Für Platin als Oberflächenbeschichtung und Eisen als Kernmaterial mit einer Schichtdicke von 100 µm und einer Frequenz des magnetischen Flusses von 75 kHz erreicht die elektrische Verlustleistung bei einer Schichtdicke von ca. 15 µm ein Maximum. Der magnetische Fluss durch den Kern verdrängt einen Anteil des Wirbelstroms in die mehr verlustbehaftete Oberflächenschicht um den Kern, wodurch eine höhere Verlustleistung entsteht, als wenn die Oberflächenschicht aus dem Kernmaterial besteht.

Ein wesentlicher Vorteil des erfindungsgemäßen Desorbers ist, dass der Probenträger direkt zur Desorption der schwerflüchtigen Substanzen genutzt wird, ohne dass ein zusätzlicher Heizer zum Erhitzen der substanztragenden Fläche erforderlich ist. Der Probenträger wird direkt erhitzt, d. h. ohne kontaktbehafteten Wärmetransfer hin zum Probenträger und ohne elektrische Zuleitungen zu einer im Probenträger befindlichen Wärmequelle.

Infolge des Skin-Effekts wird in einer dünnen, oberflächennahen Schicht des Probenträgers ein hochfrequenter elektrischer Wirbelstrom mit hoher Stromdichte induziert, der durch den Widerstand des Probenträgermaterials eine ohmsche Verlustleitung erzeugt und damit eine Erhöhung der Oberflächentemperatur bewirkt. Die geringe Eindringtiefe des Magnetfeldes infolge des Skin-Effektes ermöglicht somit, dass sowohl der magnetische Fluss als auch der elektrische Stromfluss größtenteils in der oberflächennahen Schicht erfolgen. Hierdurch wird die Herstellung von dünnen Probenträgern mit geringer Wärmekapazität ermöglicht. Somit kann für diesen einerseits eine sehr hohe Oberflächentemperatur in kurzer Zeit erreicht werden. Andererseits ermöglicht die kurze Verzögerungszeit über eine Temperaturregelung die gesteuerte temperaturspezifische Desorption von Substanzen.

Ein wesentliches Merkmal der Erfindung ist ferner, dass der Probenträger, neben der Spule und dem aufnehmenden Spulenträger, Bestandteil des zirkulierenden magnetischen Flusses ist. Der Probenträger bildet mit einem oder auch mehreren über den Probenträger verteilten Spulenträgern eine magnetische Einheit, in der ein oder mehrere separate geschlossene magnetische Wirbel den Probenträger durchfließen. Die Spule ist im Spulenträger eingebettet, welcher den magnetischen Fluss von der Spule über einen Spalt zum Probenträger und von diesem zurück in die Spule führt. Der Spalt dient einerseits für den Eintritt vom Spulenträger in den Probenträger und andererseits für den Austritt vom Probenträger in den Spulenträger.

Die Breite des Spaltes wird durch den an der Wand des Desorber befestigten Spulenträger und den Probenträger definiert. In bevorzugter Ausführung umfasst die Induktionseinheit mindestens einen Abstandshalter, wobei der mindestens eine Abstandshalter ausgebildet ist, den Probenträger zu halten und einen Breite des Spalts variabel einzustellen. Hierbei weist der Spalt eine Breite von mehr als 0,1 mm und weniger als 1 mm auf. Dies gewährleistet einen reduzierten und kontrollierten Wärmeverlust vom Probenträger zur Spule und einen verbesserten magnetischen Fluss von dem hochpermeablen Spulenträger zum Probenträger. Im Desorber wird der Probenträger durch den Abstandshalter an der Wand des Gehäuses fixiert, die zusammen einen geringen Wärmeabfluss infolge von Wärmeleitung aufweisen. Der Abstandshalter weist zur weiteren Reduzierung des Wärmeabflusses bevorzugt eine kleinflächige Fixierung für den Probenträger ausgebildet als Probenträgerhalter, beispielsweise Stifte oder Klammern, auf.

Bevorzugt sind der Spulenträger und der Probenträger einander gegenüberliegend und durch den Spalt getrennt angeordnet. Durch den Spalt hängt die Induktivität der Anordnung (Spulen, Spulenträger, Probenträger) bei Verwendung hochpermeabler Materialen für Spulenträger und Probenträger vorteilhaft nur wenig von der Permeabilität der magnetischen Komponenten ab, so dass sich diese Eigenschaft insbesondere bei einer Änderung der Permeabilität des Probenträgers infolge der Temperaturänderung beim Erhitzen stabilisierend auswirkt, beispielsweise auf die Lage der Resonanzfrequenz. Ein schmaler Spalt ermöglicht einen hohen magnetischen Fluss und verminderte Abstrahlung infolge der Magnetfelddivergenzen in die Umgebung. Der Spaltabstand wird über die Befestigung des Spulenträgers und die Befestigung des Probenträgerhalters an der Wand des Desorbers definiert.

Der Spalt zwischen Spulenträger mit der Spule und Probenträger ermöglicht einen reduzierten und kontrollierten Wärmeverlust vom Probenträger zur Spule und einen verbesserten magnetischen Fluss von der hochpermeablen Spule über den schmalen Spalt zum hochpermeablen Probenträger und von diesem zurück über den Spalt in die Spule. Ferner sorgt er für elektrische Stromisolation zwischen dem Spulenträger mit der Spule und dem Probenträger. Durch Fixierung der Breite des Spalts besitzt die beschriebene Anordnung eine definierte Induktivität, die bei hoher Permeabilität von Spulenträger und Probenträger weitgehend von deren Permeabilität unabhängig ist. Diese Eigenschaft in Form einer definierten Breite des Spaltes wird sowohl in Ringkernen als auch Schalenkernen genutzt und kann durch das Ampèresche Gesetz begründet werden. Somit wird ein definierter resonanter Betrieb in einem Schwingkreis mit definierter Frequenz ermöglicht. Da der magnetische Fluss unmittelbar durch den schmalen Spalt erfolgt, wird dessen Austreten in die Umgebung des Desorbers und damit verbundene elektromagnetische Störungen gemindert (EMV). Zudem sorgt der Spalt für eine thermische Isolation, die einen Wärmeverlust von dem Probenträger zum Spulenträger oder anderen Komponenten verringert.

Die Spule umfasst zur Erhöhung des magnetischen Flusses eine Mehrzahl von Windungen eines stromführenden Leiters und ist in dem Spulenträger, der den magnetischen Fluss zum Probenträger führt, angeordnet. Der Raum des Spulenträgers ist bevorzugt durch einen hohen Volumenanteil des Leiters bzw. der Leiter gekennzeichnet, der bzw. die die Spule ausbilden, um einerseits eine hohe Windungszahl zur Erhöhung des magnetischen Flusses zu erreichen und andererseits einen hohen elektrischen Strom bzw. eine hohe Stromdichte im Probenträger zu ermöglichen. Das Verhältnis aus dem Volumen der von den Leitern gebildeten Spule und dem die Spule umschließenden Volumen (konvexe Hülle) bestimmt den Füllfaktor. Ein hoher Füllfaktor kann insbesondere durch eine geeignete Querschnittsform des Leiters, beispielsweise quadratisch, hexagonal oder wabenförmig, erreicht werden. Der Füllfaktor beträgt bevorzugt zumindest 0,9, ferner bevorzugt zumindest 0,95, und besonders bevorzugt zumindest 0,99.Der Leiter ist bevorzugt elektrisch isoliert und besonders bevorzugt aus vielen Einzeldrähten als mehradrige Litze aufgebaut, wobei die mehradrige Litze elektrisch isolierte Einzeldrähte umfasst. Vorteilhaft ist, dass der elektrische Leiter der Spule, der bevorzugt Aluminium und/oder Kupfer umfasst, sowohl eine hohe elektrische Leitfähigkeit als auch eine hohe Wärmeleitfähigkeit aufweist und somit nicht nur die vergleichsweise geringe eigene Verlustwärme leiten kann, sondern auch die durch den indirekten Kontakt mit dem Probenträger übertragene Wärme. Da auch mit einem hohen Füllfaktor von zumindest 0,9 des Spulenträgerraums ein schlecht wärmeleitender Gasraum zwischen den Leitern und insbesondere im Übergangsbereich der Spule zum Spulenträger verbleibt, wird dieser bevorzugt durch ein besser als Luft wärmeleitendes Material ausgefüllt. Hierbei kann es sich bevorzugt um eine Wärmeleitpaste oder eine Wärmeleitharz handeln. Das besagte Material weist eine Wärmeleitfähigkeit von zumindest 0,05 W/(mK), bevorzugt zumindest 0,1 W/(mK) und besonders bevorzugt zumindest 0,5 W/(mK) auf. Insbesondere kann dazu die mit dem wärmeleitenden Materials getränkte Spule im Spulenträger mit dem wärmeleitenden Material einlagernd vergossen werden und damit im Spulenträger diesen kontaktierend fixiert werden. Zur Vermeidung von Ausgasungen der Spule und zur Verhinderung von Substanzablagerungen bei der Desorption befindet sich bevorzugt auf der dem Probenträger zugewandten oder diesen kontaktierenden Seite der Spule eine inerte Schutzschicht.

Bevorzugt wird die zur Erzeugung des Magnetfeldes notwendige Spule im Spulenträger (Ferrit) in einem Topf versenkt, so dass die Spule einen möglichst großen Abstand h zur gegenüberliegenden Oberfläche des Probenträgers besitzt, ohne dass sich diese bei ansonsten gleichbleibender Konfiguration nachteilig für die Erzeugung des Magnetflusses auswirkt. Der größere Abstand der heißen Probenträgeroberfläche zu induktiver Erregerspule durch den größeren isolierenden Spalt bewirkt vorteilhaft eine Verringerung der verlustbehafteten Wärmeleitung von der Probenträgeroberfläche zur Spule, so dass sich mit derselben elektrischen Leistung höhere Temperaturen erreichen lassen. Damit sich in diesem um den Abstand h versenkten Raum keine desorbierten Probenbestandteile ablagern können, muss der Raum hinreichend mit dem Trägergas gespült werden (Fluss: 1-100l/h), wofür der Spulenträger zumindest eine spaltförmige Vertiefung (Schlitz) besitzt und sich bis zur Spule oder einen gegeben falls auf der Schule angeordneten Schutzschicht erstreckt. Außerdem ist es zur Vermeidung von Ablagerungen günstig, wenn die Übergangskanten der Vertiefungen abgeschrägt oder abgerundet sind.

Bevorzugt weist der Probenträger, der gleichzeitig als Heizer dient, zum Erreichen hoher Temperaturen in kürzester Zeit eine Wärmekapazität von weniger als 10 J/K, bevorzugt von weniger als 1 J/K, besonders bevorzugt weniger als 0,1 J/K.

Besonders vorteilhaft an dem erfindungsgemäßen Desorber ist, dass die Heizleistung nur während der Zeitdauer des Desorptionsvorgang vom Probenträger bereitgestellt werden muss und kein Vorheizen erforderlich ist. Nach diesem Zeitabschnitt ist keine Heizleistung erforderlich, so dass der gegenüber dem Probenträger viel kühlere Probenträgergasstrom den Probenträger und die durch Wärmeleitung oder Wärmestrahlung erwärmte Umgebung entsprechend schnell abkühlen kann.

In vorteilhafter Ausführung ist der Desorber als kompaktes Zusatzmodul für ein lonenmobilitätsspektrometer zur Desorption mittel- und schwerflüchtiger Substanzen ausgeführt. In der Ausführung als steckbares Zusatzmodul kann es über Adapter, die Teil des Desorbers sind, in den Probenträgergasstrom eines lonenmobilitätsspektrometer integriert werden. Es ist in den Abmessungen miniaturisiert herstellbar und damit für den Einsatz in mobilen lonenmobilitätsspektrometern geeignet.

Der den magnetischen Fluss führende, hochpermeable und schlecht stromleitende Spulenträger (siehe oben) umfasst bevorzugt ein für hohe Frequenzen geeignetes Material, welches auch bei höheren magnetischen Flussdichten insbesondere im Bereich von 0,05 Tesla bis ca. 0,5 Tesla nur ein geringes magnetisches Sättigungsverhalten aufweist, d. h. es besteht ein durch die relative Permeabilität gegebene monoton verlaufende, nahezu lineare Abhängigkeit zwischen magnetischer Flussdichte und magnetischer Feldstärke, und vorteilhaft auch für höhere Temperaturen z. B. im Bereich von 60 °C bis 100°C von der Betriebstemperatur nur gering abhängige magnetische Eigenschaften etwa von der Permeabilität aufweist.

In bevorzugter Ausgestaltung der Erfindung ist vorgesehen, dass der Spulenträger ein Ferrit umfasst. Besonders bevorzugt handelt es sich bei dem Ferrit vorrangig um ein Eisenoxid in Verbindung mit weiteren Stoffen. Insbesondere handelt es sich dabei um weichmagnetisches Ferrit in Verbindung mit MnZn oder NiZn. Ferrite weisen eine hohe Permeabilität auf.

Der Spulenträger besitzt eine relative Permeabilität von mehr als 10, bevorzugt mehr als 100 und besonders bevorzugt mehr als 1000. Dies dient der verbesserten Leitung des Magnetflusses. Bevorzugt wird zur Vermeidung von Wirbelstromverlusten für den Spulenträger ein hochpermeables Material verwendet, das den elektrischen Strom sehr schlecht oder nicht leitet. Hochpermeable Materialien mit hoher elektrischer Leitfähigkeit wie die für den Probenträger erwähnten metallischen, z. B. Eisen, sind als Spulenträgermaterial nicht geeignet, auch dann nicht, wenn sie aus elektrisch isolierten Schichten bestehen. Auch Eisenpulverkerne wie Carbonyl-Eisenpulver weisen hohe Wirbelstromverlust auf und sind daher ungeeignet.

In weiterer bevorzugter Ausgestaltung der Erfindung ist vorgesehen, dass die Induktionseinheit einen Temperatursensor umfasst, der ausgebildet ist, die Temperatur des Probenträgers zu erfassen. Dafür wird der Temperatursensor in einer Ausführungsform über eine Wärmebrücke mit dem Probenträger verbunden und z. B. am Probenträgerhalter befestigt. Über eine dünne Signalleitung kann der Temperaturmesswert außerhalb des Desorbers durch einen Controller erfasst werden. Dies ermöglicht eine temperaturspezifische Desorption von Substanzen, ohne dass ein dafür notwendiger Temperatursensor störend auf dem Probenträger angeordnet ist.

Gemäß einer weiteren vorteilhaften Ausführungen ist der Temperatursensor für den Probenträger ein optischer Temperatursensor, z. B. eine pyroelektrischer Sensor. Hierdurch können weitere Wärmeverluste aufgrund vermiedener Kontaktstellen oder -flächen vermindert werden.

Durch den Spulenträger wird bevorzugt der gesamte Probenträger überdeckt, sodass möglichst seine gesamte Oberfläche durch den magnetischen Fluss durchströmt wird. Besonders vorteilhaft ist bei einem scheibenförmigen Probenträger eine beidseitige, gespiegelte Anordnung des Spulenträgers, wodurch sich die erreichte Verlustleistung erhöht. Außerdem kann dann durch die Gegenläufigkeit der einzelnen Magnetfelder Abstrahlung aus dem Spalt kompensiert werden.

In vorteilhafter Ausgestaltung der Erfindung weist der Spulenträger eine Schalen- und/oder Topf-Form auf, die zur Aufnahme der Spule ausgebildet ist Gemäß einer besonders bevorzugten Ausführungsform überdeckt der ein Magnetfeld führende Spulenträger mit Ferritkern in Schalen- und/oder Topf-Form einseitig einen scheibenförmigen Probenträger und ist derartig ausgebildet, dass in der Schale und/oder dem Topf die Spule aufgenommen wird. In einer weiteren besonders bevorzugten Ausführungsform wird der scheibenförmige Probenträger durch den Spulenträger beidseitig überdeckt. Dies hat den Vorteil, dass sich die ohmsche Verlustleistung bei nicht zu geringer Probenträgerdicke verdoppelt. Außerdem können sich die über den einen und anderen Spalt austretenden Magnetfelder kompensieren. In einer weiteren bevorzugten Ausführungsform wird die Fläche (einseitig oder auch beidseitig) des Probenträger von mehreren, z. B. hexagonal geformten, Spulenträgern überdeckt, in welchen separate Spulen angeordnet sind, welche ihre eigene Resonanzfrequenz besitzen und auch getrennt angesteuert werden können. Bevorzugt ist eine kreisförmige Scheibenform des Probenträgers. Für bestimmte Anwendungen z.B. als Spatel wird auch eine ovale, elliptische oder stadionförmige Scheibenform bevorzugt, für die der Spulenträger eine entsprechende überdeckende Form annimmt. In der scheibenförmigen Ausführungsform sind die Kanten des Probenträgers zur Vermeidung von Verletzungen abgerundet. In einer anderen für den Einsatz als Messer zum Schneiden besitzt der Probenträger scharfe Kanten oder Einkerbungen zum Sägen.

Vorteilhaft weist der schalen- und/oder topfförmige Spulenträger einen Innenzylinder auf. Die Spule ist in diesem Fall in dem Spulenträger gelagert. Ferner ist die Spule um den Innenzylinder umwickelt oder weist entlang ihrer Mittelachse eine Öffnung auf, die beispielsweise zylindrisch ist, in welcher der Innenzylinder des Spulenträgers angeordnet ist. In einer weiteren Ausführung ist der Innenzylinder bevorzugt gelocht, wobei dieses Loch zur Aufnahme eines schraubbaren Abstimmkern zur Abstimmung der Induktivität dient oder in einer Ausführungsform des Desorbers zum Gastransport verwendet wird.

In einer weiteren bevorzugten Ausführungsform besitzt der Spulenträger eine U-förmige, axialsymmetrische Form. Im Spulenträger wird eine ringförmige oder torroidale Spule mit bevorzugt rechteckförmigem Querschnitt eingelegt. Entlang der Mittelachse entsteht somit eine zylindrische Öffnung, in welcher sich ein zylindrischer Probenträger befindet. Die Spule umschließt den Probenträger, so wie eine klassische Spule mit Kern. Der axialsymmetrische magnetische Fluss erfolgt über den einen Schenkel des U-förmigen Spulenträgers über einen schmalen Spalt zum Probenträger und entlang einer dünnen Oberflächenschicht des Probenträgers, entsprechend der Eindringtiefe des Magnetfeldes, wieder über einen anderen schmalen Spalt zurück über den anderen Schenkel des U-förmigen Probenträgers. Der induzierte Stromfluss erfolgt somit senkrecht zum magnetischen Fluss in der Oberflächenschicht über den äußeren Mantelumfang des Probenträgers. Daraus resultieren Ausführungsformen des Probenträgers in Gestalt zylindrischer Geometrien wie (dünnwandige) Zylinder mit und ohne Boden, Stifte oder Nägel. Die Probe kann somit z. B. durch Stechen gesammelt werden. In einer speziell oberflächengehärteten Ausführungsform ist eine Kante des Probenträgers als Bohrer oder Fräser oder Schleifer ausgebildet. In einer anderen bevorzugten Ausführungsformen ist der Probenträger ein Hohlzylinder bzw. eine dünnwandige Hülse, wobei in einer weiteren Ausführungsform eine Kante zum Stechen und in einer anderen gezahnt zum Sägen geeignet ist.

Auch wenn ein axialsymmetrischer Aufbau des Probenträgers und damit des Spulenträgers zur Wirbelstromerzeugung bevorzugt wird, sind auch ovale oder rechteckige Ausführungen möglich. Demensprechend sollte der Spulenträger bzw. mehrere Spulenträger die Fläche des Probenträgers überdecken. Insbesondere muss eine geringer Spalt zwischen Probenträger und Spulenträger eingehalten werden. Überstehende Probenträgerflächen bzw. -volumina erhöhen unnötig die Wärmekapazität und sind Quellen für Wärmeflussverluste.

Nach einer vorteilhaften Ausgestaltung der Erfindung ist vorgesehen, dass das Gehäuse auf der der Induktionseinheit zugewandten Seite eine inerte, wärmereflektierende Beschichtung aufweist. Der gesamte Innenraum des Desorber-Gehäuses ist in diesem Fall mit einer wärmereflektierenden Beschichtung versehen. Besonders bevorzugt ist die Beschichtung auf einem austauschbaren Einsatz zum Einsetzen in das Gehäuse angeordnet. Insbesondere lassen sich die Bereiche der Kammer, in denen sich Probenträgeroberfläche und Spule gegenüberliegen, gehäuseseitig durch eine glatte, wärmereflektierende Schicht (z. B. Glas) und/oder eine Pigmentschicht versehen. Die Pigmentschicht umfasst bevorzugt Titanoxid und/oder metallisches Pulver. Bevorzugt handelt es sich dabei um eine vor dem Eindringen von Probegasen in die Spule ausgebildete, ausgasungsarme Schutzschicht.

Vorteilhaft wird für die gesamte dem Probenträger gegenüberliegende Fläche der Spule eine dünne wärmereflektierende, metallisch glänzende bzw. spiegelnde Schutzschicht bevorzugt.

Bevorzugt ist der Gehäuseinnenraum mit einem Gas befüllt, durch das der Probenträger vollständig ummantelt wird. Hierdurch liegt eine wärmeisolierende Schicht zur Wand vor, die Wärmeleitungsverluste reduziert. Vorteilhaft handelt es sich bei dem Gas während einer Desorption um ein inertes Gas, insbesondere Stickstoff, oder um ein Edelgas, insbesondere Argon, und andernfalls um Luft bei Umgebungsluftdruck. Grundsätzlich bietet auch die Verwendung nur eines der zuvor genannten Gase während jedes Verfahrensschritts Vorteile gegenüber einem Verfahren ohne die Verwendung eines Gases. Das im Desorber befindliches Gas ist in den meisten Anwendungen Luft. Um Oxidation und damit verbundene Zersetzungen der Substanzen insbesondere bei höheren Temperaturen zu vermeiden, kann der Innenraum des Desorbers bevorzugt während der Desorption mit einem Inertgas wie Stickstoff oder mit einem Edelgas wie Argon gefüllt werden.

In weiterer vorteilhafter Ausführung herrscht in dem Gehäuse während einer Desorption Unterdruck. Der Gasdruck im Desorber muss nicht notwendigerweise während des Desorptionsvorganges dem Umgebungsdruck entsprechen. Insbesondere kann die Desoption auch bei Unterdruck erfolgen, so dass die Produkte leichter in ein Niederdrucklonenmobilitätsspektrometer transferiert werden können.

Gemäß einer bevorzugten Ausführung umfasst der Probenträger eine Probenkontaktzone, die Strukturmerkmale zur Verbesserung der Probenaufnahme und zur Verbesserung der Desorptionsfähigkeit aufweist. Während der Magnetfeldübergangsbereich den Übergangsbereich des Magnetflusses in den Probenträger betrifft, kennzeichnet die Probenkontaktzone vorrangig die Oberfläche des Probenträgers, die der Aufnahme bzw. Ablagerung der Probe oder Substanz dient. Die Probenkontaktzone besitzt gemäß dieser Ausführung Strukturierungen und/oder Beschichtungen, die funktionell bedingt einen höheren Emissionsgrad aufweisen. Allgemein sind das gemäß dieser bevorzugten Ausführung alle Formen der Oberflächenvergrößerung mit möglichst keiner oder nur geringer Volumenvergrößerung (auch hinsichtlich der Erhöhung des ohmschen Widerstandes an der Oberfläche infolge verlängerter Wege), die zur Erhöhung der Verlustleitung bei gleichem magnetischen Gesamtfluss beitragen. Dies wird besonders bevorzugt z. B. durch Anrauen oder durch Einkerbungen erreicht, wodurch netzgitterartige, geriffelte, gewellte oder poröse Texturen entstehen. Zur Verbesserung der Probeaufnahmefähigkeit für zu verdampfende Flüssigkeiten besitzt der Probenträger als bevorzugte Strukturmerkmale um die Probenkontaktzone schmale, etwas erhöhte Ränder, die aus dem Probenträgermaterial als Barriere, Kragen oder dergleichen geformt sind, sodass vorteilhaft schalenförmige Aufnahmeflächen entstehen. Ebenfalls bevorzugt sind mehrere muldenförmige Vertiefungen in der Probenkontaktzone zum Verhindern eines Wegfließens der Flüssigkeit. Zum Verbessern des Substanztransports über das Probenträgergas besitzt der Probenträger in einer bevorzugten Ausführung poren- oder schlitzförmige Öffnungen, die sich über die Probensammelzone verteilen.

Zur Reduzierung von Wärmestrahlungsverlusten ist bevorzugt eine dünne, metallische glänzende Beschichtung mit einer Dicke von weniger als 5 µm mit geringer elektrischer Leitfähigkeit im Magnetfeldübergangsbereich des Spulenträgers aufgebracht. Bevorzugt ist diese zusätzlich durch Segmentierungen unterbrochen, beispielsweise um das Auftreten parasitärer elektrischer Wirbelflüsse zu minimieren.

Besonders bevorzugt ist der Probenträger in der vorbestimmten Probenkontaktzone (bei einer Scheibe ist das wegen der Ein- und Auskopplung des Magnetfeldes nicht die Mitte, sondern ein Kreisring zwischen Mitte und Rand des Probenträgers) oberflächenstrukturiert, um infolge der Oberflächenvergrößerung eine Erhöhung der Oberflächenhaftung bzw. Sammelkapazität der Substanzen gegenüber einer unbehandelten Oberfläche zu erreichen. Besonders bevorzugt wird eine Beschichtung der Probenkontaktzone mit einem Material wie Edelstahl, Nickel-Legierungen, Platin, Titan, Titannitrid, Titanaluminiumnitriden oder ähnlichen Metallnitriden verwendet, die einen höheren spezifischen Widerstand als das besser leitfähige Kernmaterial besitzt, und damit bei ähnlichen magnetischen Flüssen durch den Spulenträger eine höhere Verlustleitung im Probenträger erzeugt. Beschichtungen aus Titanaluminiumnitriden weisen zusätzlich auch bei sehr hohen Temperaturen eine hohe Oxidationsbeständigkeit z. B. im Vergleich zu Titannitrid auf. Grund hierfür ist, dass der elektrische Stromfluss durch den magnetischen Fluss an die Oberfläche verdrängt wird. Mit wachsender Schichtdicke steigt auch die Verlustleistung bis zu einem Maximum.

Besonders gute wärmereflektierende Eigenschaften mit einem Reflexionsgrad von bevorzugt größer als 0,8 besitzt die Magnetflussübergangszone zwischen Spulenträger und Probenträger. Für die die Probe aufnehmende Probenkontaktzone wird zudem eine dünne wärmereflektierende, metallisch glänzende bzw. spiegelnde Beschichtung mit niedriger elektrischer Leitfähigkeit, wie beispielsweise Titan, Titannitrid, Titanaluminiumnitride oder ähnliche Metallnitride, besonders bevorzugt. In diesem Fall wird besonders bevorzugt die gesamte Oberfläche des Probenträgers überdeckt. Die Schutzschicht dient in einer weiteren Ausführungsform der Beschichtung des elektrisch isolierenden Spulenträgermaterials, welches üblicherweise schlechte wärmereflektierende Eigenschaften besitzt und daher einer wärmereflektierenden Schutzschicht bedarf.

Viele Salze besitzen hohe Sublimationsenthalpien und sublimieren daher langsam und mögliche Reaktionsprodukte bzw. Zersetzungsprodukte entstehen nur zeitlich verzögert. Neben der chemisch passiven wird daher bevorzugt eine reaktionskatalytische Beschichtung z. B. aus porösem (z. B. galvanisiertem) Platin oder Nickel der Probensammelzone eingesetzt, welche durch katalytische Reaktionen besser nachweisbare Reaktionsprodukte bereitstellt. Die chemische inerte Beschichtung sollte insbesondere auch gegenüber Säuren resistent sein, so dass auf dem Probenträger chemisch Reaktionen zur Erzeugung von besser nachweisbarer Reaktionsprodukte stattfinden können. Ebenfalls bevorzugt wird auch ein mehrschichtiger Aufbau mit einer inerten Schicht zwischen Kernmaterial und reaktionskatalytischer Beschichtung.

Der Probenkontaktzone liegt bevorzugt gehäuseseitig eine Schicht, z. B. eine Glasschicht, mit sehr guten wärmereflektierenden Eigenschaften gegenüber. Der Wärmereflexionsgrad sollte daher größer 0,5, bevorzugt aber größer 0,8 und besonders bevorzugt größer 0,95 für die Wellenlänge von der Probenträgerkontaktzone ausgesandten Wärmestrahlung betragen.

In bevorzugter Ausgestaltung der Erfindung ist vorgesehen, dass die Oberfläche des Probenträgers einen geringen Emissionsgrad für die vom Probenträger ausgehende Wärmestrahlung kleiner 0,5 aufweist. Hierdurch wird eine Minimierung der Wärmeabstrahlung von der Oberfläche des Probenträgers erreicht. Insbesondere liegt im Magnetfeldübergangsbereich ein geringer Emissionsgrad vor. Unter dem Magnetfeldübergangsbereich versteht man den Bereich des Probenträgers, in den der magnetische Fluss von dem Spulenträger über den Spalt in den Probenträger tritt. Durch den hohen Temperaturunterschied des heißen Probenträgers gegenüber der umliegenden viel kälteren Wand des Desorbers würde entsprechend dem Stefan-Boltzmann-Gesetz ein hoher Wärmeverlust durch den Strahlungstransfer entstehen. Denn gemäß diesem ist der Wärmeverlust proportional zur vierten Potenz der absoluten Temperatur. Der Wärmeverlust wird maßgeblich durch die Emissionsgrade und Sichtfaktoren der abstrahlenden Fläche des heißen Körpers, hier des Probenträgers, und der ihr gegenüberliegenden kälteren Flächen bestimmt. Demnach ist es hinsichtlich einer reduzierten Verlustleistung vorteilhaft, wenn eine Minimierung der abstrahlenden Probenträgerfläche erfolgt und diese einen Emissionsgrad nahe Null besitzt. Durch seine metallische Beschaffenheit besitzt die Oberfläche des Probenträgers meist schon einen geringen Emissionsgrad. Besonders bevorzugt wird hier eine besonders glatt polierte, wärmereflektierende Oberfläche mit einem sehr geringen Emissionsgrad von kleiner 0,1 eingesetzt. Dies kann unter anderem durch eine dünne Beschichtung aus Gold erreicht werden. Das auf der Gegenseite befindliche Spulenträgermaterial erfordert dann nicht zwingend eine reflektierende Beschichtung, welche den wärmeisolierenden Spalt einengen würde.

Bevorzugt sollte der Reflexionsgrad aller dem heißen Probenträger gegenüberliegender Teilflächen größer 0,8 sein. Die der Oberfläche des Probenträgers gegenüberliegende Fläche des Spulenträgers sollte gleichfalls einen für Wärmestrahlung sehr geringen Emissionsgrad bzw. hohen Reflexionsgrad besitzen, den man mit einer entsprechenden dünnen, elektrisch isolierenden Beschichtung der Oberfläche erreichen kann. Im Fall einer glänzenden Metallisierung wird ein Material mit geringer elektrischer Leitfähigkeit wie Titan, Titannitrid, Titanaluminiumnitride oder ähnliche Metallnitride bevorzugt, die zur Vermeidung von Wirbelstromverlusten eine Schichtdicke weit unterhalb der Skin-Effekt-Eindringtiefe des Beschichtungsmaterial besitzt. Zur Minderung dieser Verluste ist die Oberfläche bevorzugt nicht durchgängig beschichtet, sondern mit isolierenden Unterbrechungen versehen, so dass lokale Sektoren mit einem geringen Wirbelstromwiderstand entstehen. Andernfalls entsteht nachteilig ein induzierter Stromfluss, der den magnetischen Fluss zum Probenträger schwächt und zur Erhitzung des Spulenträgers führt und damit im ungünstigsten Fall die Permeabilität des Kernmaterials verringert. Das Produkt der Emissionsgrade gegenüberliegender Flächen sollte bevorzugt kleiner 0,1 betragen.

In vorteilhafter Ausführung erhält das Probenträgerkernmaterial eine temperaturstabile Oberflächenbeschichtung zum Schutz gegen Korrosion und Abrieb, bevorzugt eine dünne Glasur bzw. Silikat- oder Keramikschicht. Die Beschichtung soll die Wärmekapazität nicht merklich erhöhen. Bevorzugt wird auch eine dünne vollständige Oberflächenbeschichtung des Probenträgers mit einem Metall wie Nickel. Die Oberflächenbeschichtung ist bevorzugt auch eine sehr dünne metallische Beschichtung mit geringer Permeabilität, die in der Magnetfeldübergangszone sehr gute wärmereflektierende Eigenschaften besitzt, z. B. Titannitrid. Besitzt die metallische Beschichtung einen geringeren spezifischen Widerstand als das Kernmaterial wie bei Gold, sollte diese sehr dünn sein, da ansonsten die ohmsche Verlustleistung des Probenträgers sinkt.

In vorteilhafter Ausführung ist der Probenträger als Scheibe, Rohr oder Stift ausgeführt. Die unterschiedlichen Ausführungsformen des Desorbers und des Probenträgers ermöglichen dem jeweiligen Anwendungsfall angepasste Ausführungsformen des Probenträgers als Scheibe, Rohr oder Stift. Da die Aufnahme der Substanz über die Oberfläche des Probenträgers erfolgt, bestimmt deren Größe das Aufnahmevermögen, sodass eine Mindestfläche erforderlich ist. Gleichzeitig wird eine möglichst geringe Dicke des Probenträgers angestrebt. Beispielsweise lässt sich für ein rundes Eisenplättchen, wobei Eisen eine spezifische Wärmekapazität von 449 J/(kg K) und eine Dichte von 7874 kg/m³ besitzt, mit einem Radius von 1 cm und einer von Dicke 100 µm eine Wärmekapazität gemäß C=c*ρ*V mit dem Volumen V=π*r²*h von etwa 0,11 J/K erzielen. Der Probenträger wird durch die bevorzugte erfindungsgemäße Ausführung somit durch eine geringe Masse bzw. Wärmekapazität, besonders bevorzugt kleiner als 10 J/K, gekennzeichnet, wodurch zusätzlich eine durch geringen Zeitversatz gekennzeichnete Temperaturregelung für hohe Temperaturen, insbesondere über 250 °C möglich ist. Bevorzugt weist der Probenträger eine geringe Dicke und dadurch verringerte Wärmekapazität und dennoch eine geeignete Probenkontaktfläche auf, welche die Aufnahme geringer Spuren der Substanzen durch Kontaktberührung ermöglicht. Der unterschiedliche Aufbau der Probenträger soll eine einfache Handhabung zur Probenentnahme durch Andrücken, Abstreifen, Betupfen, Schöpfen, Rollen (mittels Rollvorrichtung), Schneiden oder Stechen ermöglichen. In der scheibenförmigen Ausführungsform kann die Probe aktiv durch oberflächlichen Kontakt mit eine substanzbehaften Oberfläche, beispielsweise mittels Wischen, auf den Probenträger gelangen. Alternativ gelangt die Probe passiv durch Hilfsmittel wie Pinsel oder Lappen oder über eine Flüssigkeit aufgelöst oder suspendiert bzw. pastös auf die Oberfläche des Probenträgers.

Mit Vorteil ist vorgesehen, dass zur Erreichung einer geringen Skin-Effekt-Eindringtiefe die Frequenz des Wechselstroms 25 kHz bis 500 kHz beträgt, wobei die obere Grenze technologisch insbesondere durch Erzeugung dieser Frequenzen bei hohen Stromstärken und geringen Verlustleistungen des Schwingungserzeugers bedingt ist. Da die Verlustleistung und somit die Erwärmung der Probenträgeroberfläche in einem großen Bereich proportional mit der Frequenz zunimmt, wird bevorzugt ein hochfrequenter Wechselstrom zur Ansteuerung der Spule bevorzugt. Dies erfolgt insbesondere auch deshalb, weil damit die Schichtdicke des Probenträgers reduziert werden kann. Bei hohen Frequenzen erfolgt das Aufheizen infolge des Skin-Effekts in einer dünnen, oberflächennahen Schicht. Der erfindungsgemäße Desorber nutzt den Skin-Effekt als effiziente Möglichkeit zum Heizen. Das Eindringen des magnetischen Wechselfeldes in Metalle wird mit der Tiefe gedämpft und wird durch die sogenannte Eindringtiefe des Magnetfeldes in das Material als frequenz- und materialabhängige Kenngröße beschrieben. Hierbei handelt es sich um eine charakteristische Eindringtiefe δ, bei dem die Stromdichte im Leiter um den Faktor e⁻¹ abgesunken ist. Die Eindringtiefe berechnet sich über δ = 1/√ (π * f * µ0 * µr *σ), wobei f die Frequenz, µ0 die magnetische Feldkonstante, µr die relative Permeabilität und σ die elektrische Leitfähigkeit ist. Das Verhalten kann durch die Maxwell-Gleichungen vollständig erklärt werden. Die reziproke Eindringtiefe ist proportional zur Wurzel aus dem Produkt von Frequenz, elektrischer Leitfähigkeit und relativer Permeabilität. Mit steigenden Frequenzen konzentriert sich der magnetische Fluss somit auf die Oberfläche des Probenträgers. Die Eindringtiefe kennzeichnet den maßgeblich zur Verlustwärme P beitragenden Bereich, aber nicht eine feste Grenze, da auch tiefere Schichten hierzu einen nutzbaren Anteil beitragen. Mit zunehmender Schichtdicke erhöht sich jedoch das Volumen bzw. die Masse und somit die Wärmekapazität der Quelle, wodurch sich deren Aufwärmzeit erhöhen wird. Begrenzt wird die obere Frequenz durch die Materialeigenschaften des Spulenträgers, den Aufbau der Spule und die Begrenzungen einer Ansteuerelektronik. Auch die eventuell verwendeten Beschichtungen werden für die Wahl einer geeigneten Frequenz berücksichtigt.

Bevorzugt ist das Verhältnis aus Schichtdicke D des Probenträgers und Eindringtiefe δ größer als 2 und kleiner als 10. Die Verlustleistung kann mit zunehmender Schichtdicke erhöht werden, wodurch sich aber ebenfalls die Wärmekapazität erhöht. Je nachdem, ob eine sehr kurze Aufwärmzeit oder eine höhere Verlustleistung gewünscht ist, kann die Schichtdicke D des Probenträgers variieren. Sie sollte bevorzugt doppelt so groß wie die Eindringtiefe δ sein. Aufgrund des exponentiellen Abfalls der magnetischen Flussdichte sollte eine Schichtdicke jedoch kleiner als das zehnfache der Eindringtiefe δ sein.

Eine alternative Ausführung, die nicht Teil der Erfindung ist, sieht vor, dass die Spule außerhalb des Desorbergehäuses angeordnet wird. Die Anordnungen basieren dabei auf ringförmigen Geometrien des Spulenträgers, auf denen die Spule gelagert wird. Bei der Spule handelt es sich vorzugsweise um eine ringförmige oder toroidale Spule. Beispielhaft ist entlang der Mittelachse einer Öffnung der Spule ein Teil eines Spulenträgers angeordnet, der gemäß dieses Ausführung als Ringkern umgesetzt ist. Der Spulenträger weist in diesem Fall zwei Schenkel auf, zwischen denen ein schmaler Spalt zum Austritt der magnetischen Feldlinien ausgebildet ist und in dem ein scheibenförmiger Probenträger angeordnet ist. Ferner umfasst der Spulenträger in dieser Ausführung zur Fortsetzung des magnetischen Flusses einen kragenförmigen Bestandteil, der innerhalb des Desorbergehäuses angeordnet ist.

Die Erfindung betrifft ferner ein lonenmobilitätsspektrometer zum Ermitteln einer lonenmobilität einer Probe, das einen zum Transport von Ionen von einem Schaltgitter zu einem Ionendetektor entgegen einer axialen Driftgasströmung ausgebildeten zylindrischen Driftraum sowie einen an den Driftraum in axialer Richtung angrenzenden zylindrischen Reaktionsraum mit einem zu dem Schaltgitter benachbarten Probengaseinlass zum Einleiten eines Probengases aufweist. Zudem umfasst das lonenmobilitätsspektrometer einem dem Schaltgitter gegenüberliegenden Gasauslass zum Ableiten von Driftgas und von Probengas, eine am Gasauslass angeordnete lonisierungsquelle, und einen Desorber gemäß der vorliegenden Erfindung.

Das erfindungsgemäße Verfahren zur Bereitstellung einer geregelten Spannung umfasst grundsätzlich folgende Schritte:
- Einführen des mit einer Substanz beladenen Probenträgers über die verschließbare Öffnung in den Desorber;
- Induktives Erhitzen des Probenträgers mittels eines durch einen in der Spule fließenden Wechselstrom erzeugten, hochfrequenten, magnetischen Wechselfelds;
- Zuführen der desorbierten Probe mittels der Strömung (bevorzugt auch mittels Konvektion) eines dem Desorber über die Zuleitungen zugeführten und über den Probenträger geleiteten Probenträgergasstroms über die Ableitungen direkt oder indirekt über einen Probengasaustauscher (Membran, Pinhole-Einlass) in den Reaktionsraum des lonenmobilitätsspektrometers, in welchem die desorbierte Probe mittels einer lonisierungsquelle ionisiert wird und das ionisierte Probengas durch ein Driftfeld von einem Reaktionsraum in einen Driftraum gelangt, wobei es zum Nachweis durch ein Schaltgitter moduliert und der lonenstrom mit einem Ionendetektor gemessen und das entstehende Signal ausgewertet wird.

Die induktive Erwärmung des Probenträges erfolgt in bevorzugter Weise geregelt und kann sowohl sprunghaft in kurzer Zeit, stufenweise oder nach einem vorgegebenen Zeitprofil bis zu einer Endtemperatur über eine elektronische Steuer- und Regeleinheit erfolgen.

Bevorzugt umfasst der Desorber auch eine Sensorik, sodass während des Verfahrens ein Probenträger im Desorber erkannt wird und der Desorptionsprozess durch eine mit der Sensorik verbundene Steuerung beginnt, wenn die Sensorik die Anwesenheit des Probenträgers im Innenraum des Desorbers erfasst.

In einer bevorzugten Ausführungsform des Verfahrens werden die Substanzen auf dem Probenträger im Desorber durch einen zugeführten Probenträgergasstrom aufgenommen und direkt in ein lonenmobilitätsspektrometer zur Analyse geleitet. Gemäß einer weiteren bevorzugten Ausführungsform können die Substanzen über ein schaltbares Ventil in Abhängigkeit von der Desorptionstemperatur wie zuvor zur Analyse geleitet oder in ein Filter- oder Reinigungssystem umgeleitet werden.

Allgemein ist bekannt, dass verschiedene Wärmetransportprozesse den energetischen Wirkungsgrad der Wärmequelle mindern. Durch Strömung über den Probenträger gelangt die dort aufgenommen Probe mit dem Probenträgergasstrom in den Reaktionsraum des lonenmobilitätsspektrometers, wo sie mit einer lonisierungsquelle ionisiert wird und die entstehenden Ionen über eine Driftzeitmessung im Driftraum nach der lonenmobilität unterschieden werden. Dazu ist nur ein minimaler Probenträgergasstrom in den Reaktionsraum des lonenmobilitätsspektrometers notwendig, vorteilhafterweise mit einem Volumenstrom in der Größenordnung von z. B. 1l/h bis10 l/h. Es zeigt sich, dass durch diesen Volumenstrom gegenüber anderen Wärmetransportprozessen nur ein unwesentlicher Wärmetransport und damit Wärmeverlust erfolgt.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: Schnittzeichnung einer ersten erfindungsgemäßen Ausführung des Desorbers mit flachem Probenträger und einseitiger Spule;
- Figur 2: Schnittzeichnung einer zweiten erfindungsgemäßen Ausführung des Desorbers mit flachem Probenträger mit einer tellerförmigen Vertiefung und beidseitiger Spule;
- Figur 3: Schnittzeichnung einer dritten erfindungsgemäßen Ausführung des Desorbers mit zylindrischem Probenträger und umlaufender Spule;
- Figur 4: Schnittzeichnung einer vierten erfindungsgemäßen Ausführung des Desorbers mit als Topf ausgebildetem, zylindrischem Probenträger und umlaufender Spule in senkrechter Ausführung;
- Figur 5e - 5f: verschiedene Ausführungsformen eines scheibenförmigen Probenträgers;
- Figuren 6: Schnittzeichnung einer fünften erfindungsgemäßen Ausführung des Desorbers mit flachem Probenträger mit umlaufender Vertiefung und einseitiger Spule und verschiedenen Ausführungen der Spulenwicklung;
- Figur 7: schematischer Aufbau eines erfindungsgemäßen lonenmobilitätsspektrometer mit einer erfindungsgemäßen Ausführung des Desorbers,
- Figur 8: elektronische Steuer- und Regeleinheit zur Steuerung eines erfindungsgemäßen Desorbers, und
- Figur 9: Schichtaufbau eines Probenträger eines erfindungsgemäßen Desorbers.

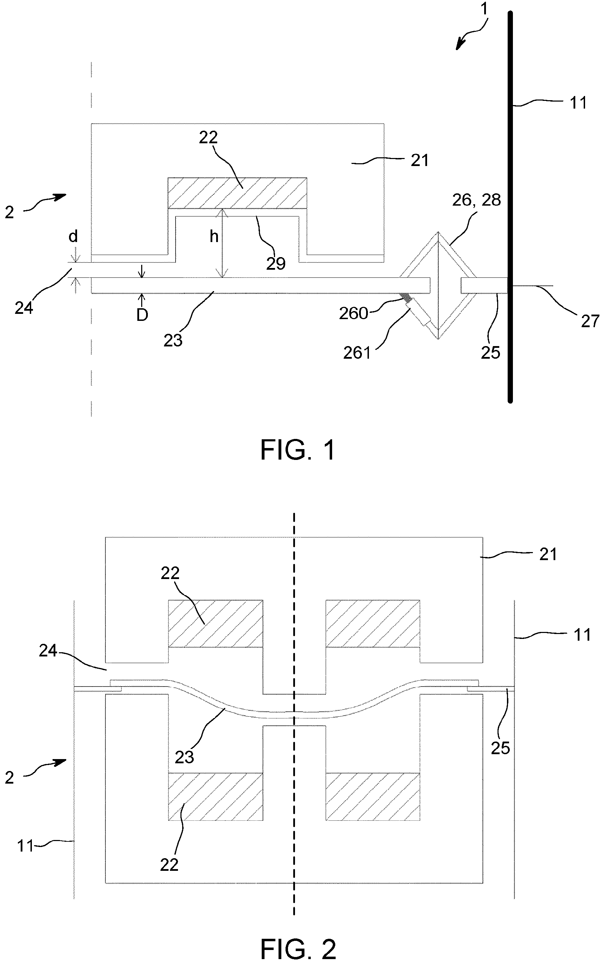

Figur 1 zeigt eine erste erfindungsgemäße Ausführung des Desorbers 1 mit flachem Probenträger 23 und einseitiger Spule 22 in einer Schnittansicht. Gezeigt wird nur ein Ausschnitt einer gesamten Induktionseinheit 2, begrenzt durch die gestrichelt dargestellte Rotationsachse. Es liegt eine Anordnung vor, bei der Spulenträger 21 und Probenträger 23 einander direkt gegenüber liegen. Der Spulenträger 21 und der Probenträger 23 sind durch einen schmalen Spalt 24 voneinander beabstandet. Die Breite d des Spalts 24 wird über die Befestigung des Spulenträgers 21 und die Befestigung eines Abstandshalters 25 definiert. Der Abstandshalter 25 wird an einer Wand 11 des Desorbergehäuses befestigt, was in den Figuren nicht näher dargestellt ist. Die Breite d des Spalts 24 kann vorliegend wahlweise durch die Fixierung des Probenträgers 23 über den schlecht wärmeleitenden Abstandshalter 25 oder über eine Lageänderung des Spulenträgers 21 gegenüber dem Abstandshalter 25 verändert werden. Darüber hinaus umfasst die Induktionseinheit 2 gemäß der dargestellten Ausführung eine Beschichtung 29, die auf der dem Probenträger 23 zugewandten Oberfläche der Spule 22 sowie der dem Probenträger 23 zugewandten Oberfläche des Spulenträgers 21, insbesondere im Bereich des Spalts 24, der sich in der Magnetfeldüberganszone befindet, angeordnet ist. Um einen ausreichenden Abstand h zwischen Probenträger 23 und Spule 22 zu gewährleisten, weist der Probenträger ein Ausnehmung auf, innerhalb dessen die Spule gelagert ist. Hierdurch wird der Wärmeverlust vom heißen Probenträger 23 zur Spule verringert. Die Spule 23 wird somit im topfförmigen Spulenträger versenkt.

Der Probenträger 23 lässt sich zum Zwecke der Probenaufnahme bzw. zur Übertragung der Probe auf den Probenträger 23 aus dem Desorber 1 entfernen. Dazu wird der Probenträger 23 in eine Haltevorrichtung des Probenträgerhalters 26, z. B. einem Griff, gesteckt und im vorliegenden Fall in einer Klammer 28 festgeklemmt. Da der Probenträger 23 eine hohe Permeabilität besitzt, kann der Abstandshalter 25 auch eine magnetische Vorrichtung sein. Diese kann durch Permanentmagnete oder bevorzugt über mit Gleichstrom betriebene Elektromagnete erfolgen, wobei durch Einschalten der Probenträger 23 fixiert und durch Ausschalten gelöst wird.

In einer anderen nicht dargestellten Ausführungsform wird der Probenträger 23 durch einen Abstandshalter 25 mit einer Klemme fixiert und durch wenige, weitere tangential berührende Probenträgerhalter 26 gegen Verrutschen gesichert. Eine bevorzugte Fixierung erfolgt durch kurze fingerförmige, federnde metallische Krallen, die den Probenträger 23 punktuell klemmend berühren. Über einen nagelförmigen Stift, der den Probenträger 23 gleichfalls nur punktuell berührt, wird dieser gegen ein zu tiefes Einführen gestoppt. Zur Stabilisierung kann der Probenträger 23 bevorzugt mit an dem Abstandshalter 25 befestigten besonders schlecht wärmeleitenden Plättchen, z. B. aus Glimmer (Mica) wie Phlogopit, beidseitig fixiert werden. Bevorzugt wird auch ein eingekerbtes Glimmerplättchen verwendet, dass in einen zylindrischen Abstandshalter 25 eingespannt wird, so dass der Probenträger 23 nur die dünnen Seitenflächen der Plättchen berührt.

An dem Probenträger 26 befindet sich ein Temperatursensor 261, welcher über eine Wärmebrücke 260 mit den Probenträger 23 verbunden ist.

Die Form des Probenträgers 23 besitzt bevorzugt eine axialsymmetrische Form. Entsprechend ist die Form des Spulenträgers 21 und der Spule 22 angepasst. Übliche Ausführungen in Schalenform sind gut geeignet, bieten aber in den Standardformen begrenzten Raum zur Unterbringung einer Spule 22 mit erhöhter Windungszahl. Ausgehend von dieser Form ist ein tieferer Topf günstiger. Bevorzugt werden scheibenförmige oder zylindrische bzw. hohlzylindrischen Ausführungen. Mit diesen können über angepasste Spulenträger 21 axialsymmetrische magnetische Flüsse und im Probenträger 23 die erwünschten elektrischen Wirbelströme erzeugt werden.

Eine weitere nicht dargestellte bevorzugte Ausführungsform betrifft eine schnelle sequenzielle Desorption mittels mindestens zwei Probenträgern 23, welche sich in einer wärmeisolierenden nach der Anzahl der möglichen Probenträger 23 aufgeteilten Halterung befinden und in jedem Sektor der Halterung über wenige Auflagestifte gelagert werden. Diese werden nacheinander über eine Fördermechanismus in den Desorber 1 in die bevorzugte Position zur Induktionseinheit 2 eingeführt. Der Desorber 1 besitzt dazu zwei gegenüberliegende Schlitze. Die Probenträgersektoren sind derart gestaltet, dass sie um den Probenträger 23 einen isolierenden Rahmen bilden, der im eingeführten Zustand im Desorber 1 diesen dichtend schließt. Die Arbeitsweise ähnelt einem Scanner für Filmstreifen.

Im Falle eines Parallelbetriebs gelangt die gesamte Halterung mit den Probenträgern 23 in einen für diesen Betriebsweise bevorzugten Desorber 1, der dadurch gekennzeichnet ist, dass jedem einzelnen, indizierten Probenträger 23 gegenüberliegend eine gleichartige, unabhängig aktivierbare Induktionseinheit zugeordnet ist. Der Probenträgergasstrom umströmt alle Probenträger 23 gleichartig. Die Desorption von den Probenträgern 23 erfolgt einzeln und die desorbierte Substanz gelangt so zum Eingang des lonenmobilitätsspektrometers. Nach der Desorption erfolgt eine rasche Abkühlung des einzelnen Probenträgers 23, so dass der nächste aktiviert werden kann. Vorteilhaft erfordert ein solcher sequentieller Parallelbetrieb (im Vergleich zu einem gleichzeitigen Parallelbetrieb) keine parallelen Gasausgänge oder Auswerteeinheiten.

Figur 2 zeigt eine Schnittzeichnung einer zweiten erfindungsgemäßen Ausführung der gesamten Induktionseinheit 2 des Desorbers 1 mit flachem Probenträger 23 mit einer tellerförmigen Vertiefung und beidseitiger Spule 22, wobei erneut die Rotationsachse in Form einer gestrichelten Linie dargestellt ist. Jede Spule 22 einer Seite ist auch hier in einer Ausnehmung gelagert und umläuft einen Innenzylinder des Spulenträgers 21. Hierdurch wird die erreichte Verlustleistung erhöht. Außerdem kann durch die Gegenläufigkeit der einzelnen Magnetfelder die Abstrahlung aus dem Spalt 24 kompensiert werden. Zur Entnahme des Probenträgers 23 lässt sich der obere Spulenträger 21 mitsamt der Spule 22 vertikal bewegen.

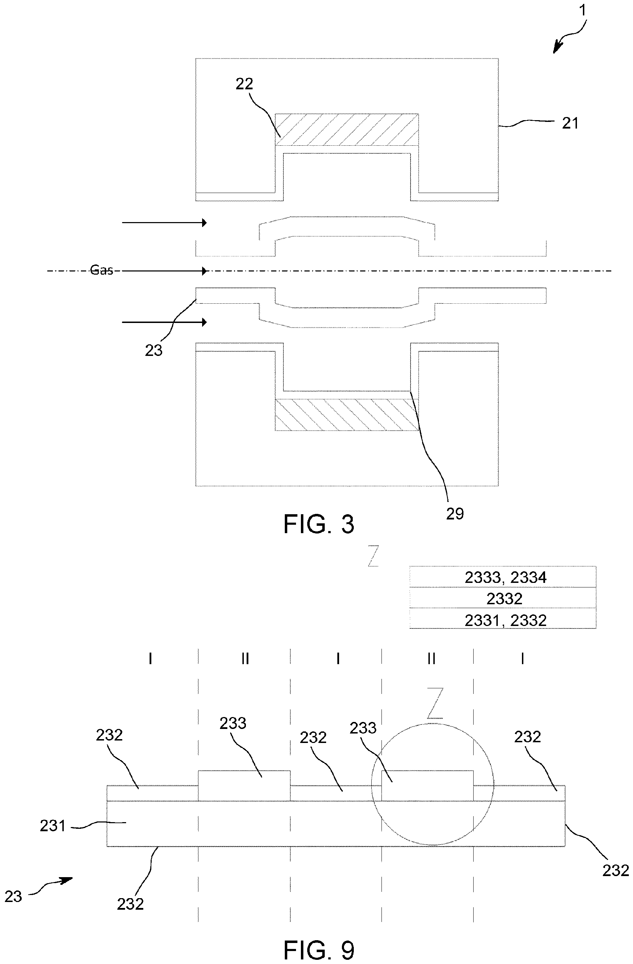

Figur 3 zeigt eine Schnittzeichnung einer dritten erfindungsgemäßen Ausführung des Desorbers 1 mit zylindrischem Probenträger 23 und umlaufender Spule 22. Als Spule kann beispielsweise eine Zylinderspule dienen, die eine Torusform aufweist. Die Spule 22 weist eine zylindrische Öffnung entlang ihrer Mittelachse, die in Figur 3 als Strichpunktlinie dargestellt ist, auf, innerhalb derer der Probenträger 23 angeordnet ist, sodass die Spule 22 den Probenträger 23 umläuft. Der Probenträger 23 ist ein Hohlzylinder, der an seiner äußeren Oberfläche eine Rollfläche bzw. Wischfläche in Form einer lokalen Erhebung aufweist. Zur Probenentnahme kann der Probenträger 23 beispielsweise auf eine Rolle gesteckt werden. Soll eine Probennahme durch Stechen erfolgen, empfiehlt es sich, einen zylinderförmigen Probenträger 23 ohne Erhebungen zu verwenden.

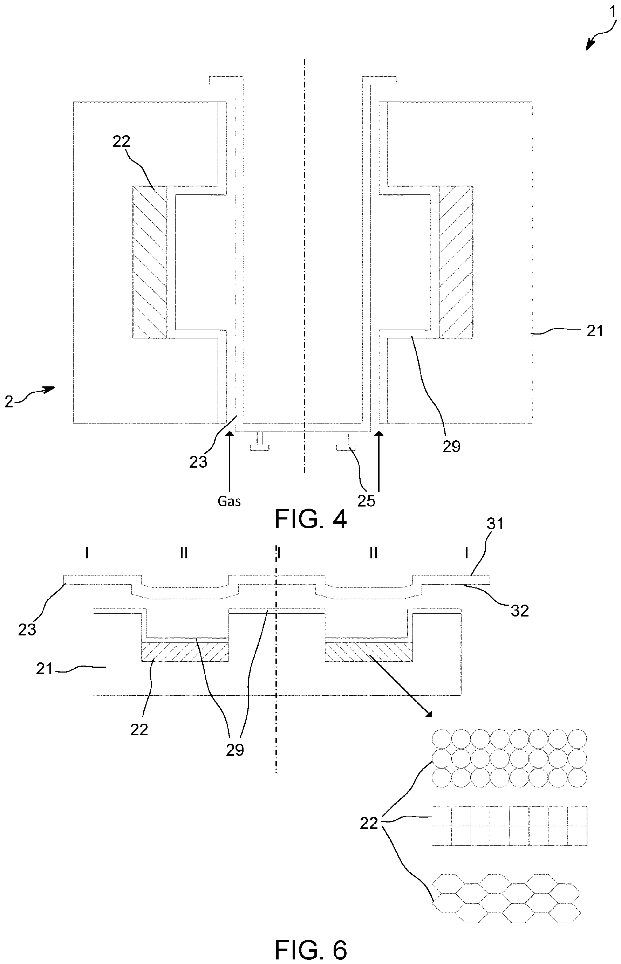

In Figur 4 wird die Schnittzeichnung einer vierten erfindungsgemäßen Ausführung des Desorbers 1 mit zylindrischem Probenträger 23 und umlaufender Spule 22 in senkrechter Ausführung dargestellt. Im Spulenträger wird eine ringförmige oder torroidal geformte Spule 22 mit bevorzugt rechteckförmigem Querschnitt eingelegt. Entlang der gestrichelt dargestellten Mittelachse der Spule 22 entsteht somit eine zylindrische Öffnung, in welcher der zylindrischer Probenträger 23 angeordnet ist. Die Spule 22 umschließt den Probenträger 23, so wie eine klassische Spule mit Kern. Der induzierte Stromfluss erfolgt senkrecht zum magnetischen Fluss in der Oberflächenschicht des Probenträgers 23 über dessen äußeren Mantelumfang. Der Probenträger kann durch zylindrische Geometrien wie (dünnwandige) Zylinder mit und ohne Boden, Stifte oder Nägel gebildet werden. Vorliegend ist der Probenträger ein dünnwandiger Zylinder mit Boden.

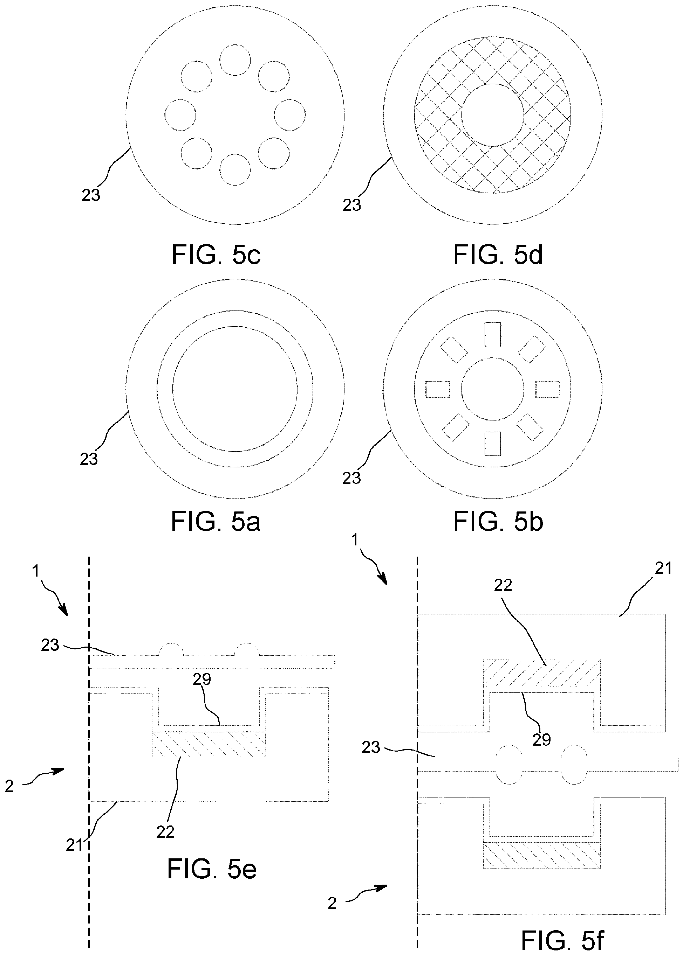

In Figuren 5a - 5f werden verschiedene Ausführungsformen eines scheibenförmigen Probenträgers 23 dargestellt. Figur 5a zeigt einen Probenträger 23, der zur verbesserten Aufnahme einer nachzuweisenden Substanz ein ringförmige Mulde in der Probenkontaktzone (Bereich II siehe nachfolgende Beschreibung) aufweist. Im Magnetfeldübergangsbereich (Bereich I siehe nachfolgende Beschreibung) ist der Probenträger weiterhin flach ausgeführt. Eine Alternative in Form einer Mehrzahl von kreisförmigen Mulden wird in Figur 5c dargestellt. Ein weitere Möglichkeit zur verbesserte Substanzaufnahme wird durch netzgitterartige Texturen wie in Figur 5d dargestellt bereitgestellt. Gemäß der Ausführung in Figur 5b weist der Probenträger 23 zur Verbesserung des Substanztransportes mittels das Probenträgergas kleine, poren- oder schlitzförmige Öffnung auf, die sich über die Probensammelzone verteilen und rechteckförmig sind. Zur Verbesserung der Probeaufnahmefähigkeit für zu verdampfende Flüssigkeiten besitzt der axialsymmetrische Probenträger 23 mit gestrichelt dargestellter Rotationsachse gemäß der in Figur 5e gezeigten Ausführung als bevorzugte Strukturmerkmale um die Probenkontaktzone schmale, etwas erhöhte Ränder, die aus dem Probenträgermaterial als Barriere bzw. Kragen u. a. geformt werden können, so dass schalenförmige Aufnahmeflächen entstehen. Dies entspricht im Wesentlichen dem in Figur 5a dargestellten Probenträger 23 mit ringförmiger Mulde. Diese erhöhten Ränder können im Falle der Anordnung einer beidseitigen Spule 22 auch beidseitig auf dem Probenträger, wie in Figur 5f dargestellt, ausgeführt werden.

Figur 6 zeigt die Schnittzeichnung einer fünften erfindungsgemäßen Ausführung des Desorbers 1 mit flachem Probenträger 23 mit gestrichelt dargestellter Rotationsachse umlaufender Vertiefung und einseitiger Spule 22. Der Probenträger 23 ist grundsätzlich vorteilhaft in mindestens zwei Zonentypen aufgeteilt, den Magnetfeldübergangsbereich I und die Probenkontaktzone II. Der Magnetfeldübergangsbereich I betrifft den Übergangsbereich des Magnetflusses in den Probenträger 23, die Probenkontaktzone II dient vorrangig der Aufnahme bzw. Ablagerung der Probe. Die einzelnen Zonen sind der Aufgabe entsprechend funktional beschichtet. Die Funktionsschichten können sogar auf der Unter- und Oberseite des Probenträgers 23 unterschiedlich gestaltet sein. Für eine einseitige scheibenförmige Spulenanordnung kann die magnetfeldabgewandte Seite des Probenträgers 23 gänzlich für die Desorptionsaufgabe verwendet werden und eine Emaille- oder Nickelschicht 31 (Beschichtung A) erhalten. Die ihr angrenzende Gasschicht sollte zur Vermeidung von Wärmeleitungsverlusten in der Schichtdicke recht groß sein, beispielsweise 5 mm. Die der Probenträgerseite 23 gegenüberliegende Wand des Desorbergehäuses erhält zudem eine nicht dargestellte hoch wärmereflektierende Beschichtung, so dass die Wärmeverluste auf dieser Seite sehr gering ausfallen. Auf der der Spulenanordnung zugewandten Seite des Probenträgers 23 ist gemäß dieser Ausführung eine Titannitridbeschichtung 32 (Beschichtung B) angeordnet. Ferner wird schematisch der Aufbau der Spule 22 gezeigt. Diese kann aus mehradriger Litze bestehen, die unterschiedliche Querschnittsflächen aufweist. Eine Möglichkeit ist eine kreisförmige Querschnittsfläche, wobei jedoch Litze bevorzugt wird, die aus quadratischer oder hexagonaler Litze mit zueinander isolierten Einzeldrähten aufgebaut ist. Hierdurch kann ein hoher Füllfaktor erreicht werden.

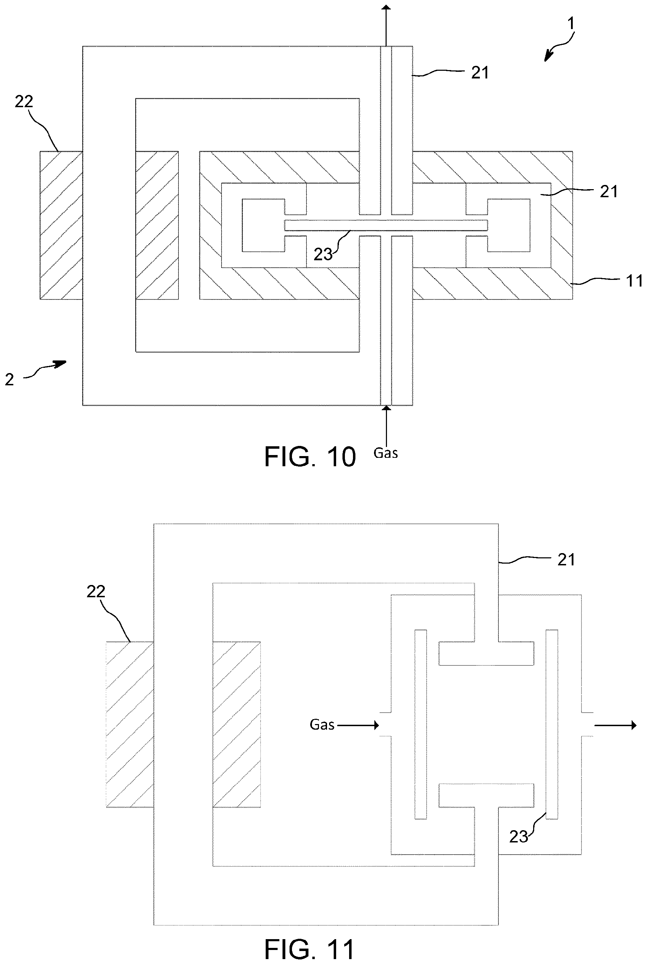

Eine erste und zweite alternative Ausführung eines erfindungsgemäßen Desorbers sind in den Figuren 10 und 11 dargestellt. Der wesentliche Unterschied zu den übrigen beschriebenen Ausführungsbeispielen liegt darin, dass die Spule 22 außerhalb des Desorbergehäuses 11 angeordnet wird. Die Anordnungen basieren im Gegensatz zu den bisher verwendeten schalenförmigen Geometrien auf ringförmigen Geometrien des Spulenträgers 21, auf denen die Spule 22 gelagert wird, so z.B. eine ringförmige oder toroidale Spule 22. In den Figuren 10 und 11 ist nur die relative Anordnung aus Spulenträger 21, Spule 22 und Probenträger 23 sowie aus Desorbergehäuse 11 dargestellt. In Figur 10 ist entlang der Mittelachse einer Öffnung der Spule 22 ein Teil eines Spulenträgers 21 angeordnet, der gemäß dieses Ausführung als Ringkern umgesetzt ist. Der Spulenträger 21 weist zwei Schenkel auf, zwischen denen ein schmaler Spalt zum Austritt der magnetischen Feldlinien ausgebildet ist und in dem der scheibenförmige Probenträger 23 angeordnet ist. Ferner umfasst der Spulenträger 21 als Fortsetzung einen kragenförmigen Bestandteil, der innerhalb des Desorbergehäuses 11 angeordnet ist. Auch in Figur 11 findet ein Ringkern als Spulenträger 21 mit entsprechender Spule 22, die ebenfalls außerhalb des Desorbergehäuses 11 gelagert wird, Anwendung. Ferner dient gemäß Figur 11 ein zylinderförmiger Probenträger 23 der Aufnahme einer Probe.

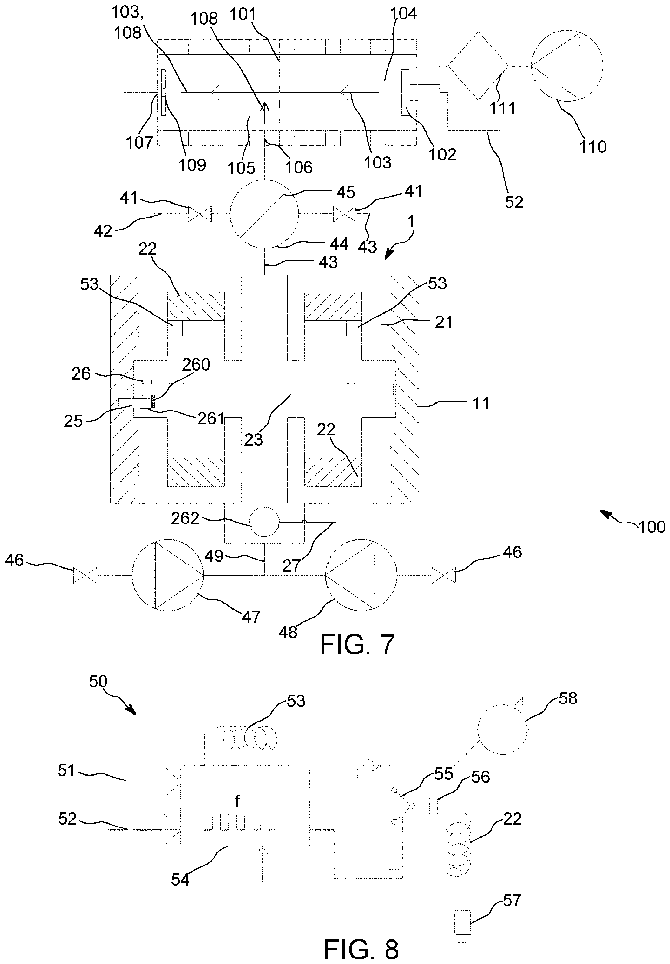

Figur 9 veranschaulicht den Aufbau eines erfindungsgemäßen Probeträgers 23 und Alternativen für geeignete Beschichtungen des Probenträgers. Grundsätzlich umfasst der Probenträger 23 einen Kern 231, der aus hochpermeablem und elektrisch sehr gut leitendem Material besteht. Der Probenträger ist gemäß dieser Ausführung als Scheibe ausgeführt, die einseitig aktiv ist, mit anderen Worten also nur auf einer Seite von einer nicht dargestellten Anordnung aus Spulenträger 21 und Spule 22 überdeckt wird. Ferner lässt sich die aktive Seite des Probenträgers 23 in den Magnetfeldübergangsbereich I, einem für die Probe inaktivem Bereich, und einer Probenkontaktzone II, einem für die Probe aktiven Bereich, unterteilen. Innerhalb des Bereichs I erfolgt die Einkopplung des Magnetfelds in den Probenträger 23. Der Kern wird in den Bereichen I und II mit unterschiedliche Beschichtungen beschichtet. Bereich I umfasst eine auf dem Kern 231 angeordnete Beschichtung 232, die einen hohen Reflexionsgrad für Wärmestrahlung aufweist. Bei der Beschichtung 232 kann es sich um eine Inertschicht beispielsweise aus Glas oder Emaille oder um eine Reflexionsschicht mit hohem Reflexionsgrad bzw. niedrigem Emissionsgrad beispielsweise aus Titannitrid oder einem anderen Metallnitrid handeln. Die Beschichtung 232 ist bevorzugt auch auf dem nicht von Spulenträger 21 und Spule 22 überdeckten Bereich auf der gegenüberliegenden Seites des Probenträgers 23 sowie dessen seitlichen Endflächen angeordnet, wie ebenfalls in Figur 9 angedeutet ist. Bereich II umfasst eine Probenträgerschicht 233, die ihrerseits wiederum aus mehreren Schichten aufgebaut sein kann. Dies ist in dem vergrößerten Ausschnitt Z der Beschichtung schematisch dargestellt. Angrenzend an den Kern ist innerhalb der Probenträgerschicht 233 ist eine Beschichtung 2331 zur mechanischen Strukturierung angeordnet oder eine Widerstandsschicht 2332 mit einem höheren spezifischen Widerstand. Letztere kann auch additiv zu einer Beschichtung 2331 nachfolgend ergänzt werden, wie Figur 8 zeigt. Den Abschluss bildet eine Schicht, die als katalytische Schicht 2333 oder als Interschicht 2334 gebildet werden kann. Die Schichten 2333 und 2334 werden grundsätzlich an der Oberfläche eingesetzt.

Figur 7 zeigt einen schematischen Aufbau eines erfindungsgemäßen lonenmobilitätsspektrometers 100 mit einer erfindungsgemäßen Ausführung des Desorbers 1. Das lonenmobilitätsspektrometer 100 weist dabei einen zylindrischen Driftraum 104 und einen darin in axialer Richtung angrenzenden zylindrischen Reaktionsraum 105 auf. Der Driftraum 104 wird dabei auf einer dem Reaktionsraum 105 zugewandten Seite von einem Schaltgitter 101 begrenzt. Auf einer dem Schaltgitter 101 gegenüberliegenden Seite wird der Driftraum 104 von einem Ionendetektor 102 begrenzt und wird der Reaktionsraum 105 von einem Gasauslass 107 begrenzt. Ein Driftgaseinlass ist in unmittelbarer Nähe des Ionendetektor 102 angeordnet. Ein Probengaseinlass des Spektrometers 106 ist im Reaktionsraum 105 benachbart zum Schaltgitter 101 angeordnet. In dem Reaktionsraum 105 ist ferner eine lonisierungsquelle 109 nahe des Gasauslasses 107 angeordnet.

Im Betrieb des lonenmobilitätsspektrometer 100 wird ein Driftgas 103 durch den Driftgaseinlass mit einer definierten Strömungsgeschwindigkeit in den Driftraum 104 eingeleitet mittels einer Driftgaspumpe 110. Zuvor passiert das Driftgas 103 einen Trockengasfilter. Das Driftgas 103 durchströmt den Driftraum 103, das Schaltgitter 101 und den Reaktionsraum 105 und verlässt das lonenmobilitätsspektrometer 100 durch den Gasauslass 107. Ferner kann im Betrieb des lonenmobilitätsspektrometers 100 ein Probengas 108, bestehend aus in einem Trägergas enthaltenes Probenmaterial, durch einen Probengaseinlass 106 in den Reaktionsraum 105 eingeleitet werden. Das Probengas 108 vermischt sich mit dem Driftgasstrom 103 in axialer Richtung stromabwärts von dem Probengaseinlass 106 und der Gesamtgasstrom aus Probengasstrom 108 und Driftgasstrom 103 strömt in Richtung des Gasauslass 107. Bevor der Gesamtgasstrom das lonenmobilitätsspektrometer 100 durch den Gasauslass 107 verlässt, passiert diese eine lonisierungsquelle 109.

An der lonisierungsquelle 109 wird das Probenmaterial durch eine radioaktive Quelle , Röntgen- bzw. UV-Strahlung oder lokal durch dielektrische Barrieeentladung ionisiert. Die Ionen werden von einem elektrischen Feld durch in Richtung des lonendetektors 102 "gezogen" und erreichen eine für sie charakteristische Driftgeschwindigkeit, mit der sie sich schließlich zum Ionendetektor bewegen, der diese empfängt.

Ferner umfasst das lonenmobilitätspektrometer 100 einen Desorber 1. Hierbei kann es sich um eine Ausführung gemäß einer der vorhergehend beschriebenen Desorber handeln, aber auch um jegliche weitere Ausführung gemäß der vorliegenden Erfindung. Schematisch dargestellt ist in diesem Fall ein Desorber 1 mit einer im Spulenträger befindlichen Öffnung (Lochkern) und beidseitiger, umlaufender Spule 22 sowie scheibenförmigen Probenträger 23.

Für die Kontrolle der Temperatur des Probenträgers 23 ist es zur Steuerung der Betriebsparameter der Spule 22 zweckmäßig, diesen mit einem Temperatursensor (z. B. Platin-Widerstand, Thermoelement) mit sehr geringer Wärmekapazität zu verbinden. Bevorzugt wird der Temperatursensor 261 kleinflächig über einen vorhandene Probenträgerhalter 26, der insbesondere eine Klammer 28 umfasst, verbunden. Die Messwerte werden analog oder digital zur in Figur 8 dargestellten elektronischen Steuer- und Regeleinheit 50 mittels der Signalleitung 27 übertragen. Die elektronischen Steuer- und Regeleinheit 50 überwacht dann die Solltemperatur, z. B. für die zeitgesteuerte Einstellung eines Temperaturprofils. Die Temperatur an der Oberfläche, die wegen der hohen Wärmeleitung der Kerntemperatur des Probenträgers 23 entspricht, kann bevorzugt auch durch Messung der Wärmestrahlung des Probenträgers 23 durch einen pyroelektrischen Sensor 262 bestimmt werden, die z. B. über ein Loch durch den Spulenträger 21, wie in Figur 7 realisiert, oder einem Fenster an dem Desorbergehäuse angeordnet sind. Da der Probenträger 23 aber bevorzugt einen sehr geringen Emissionsgrad besitzt, erhält er bevorzugt eine sehr kleinflächige, verlustbehaftete Markierung mit einem deutlich höheren Emissionsgrad, z. B. mit einem Wert von fast 1. Eine auf diese Markierung fokussierende Optik bildet die Strahlung auf den pyroelektrischen Sensor ab. Eine andere bevorzugte indirekte optische Temperaturmessung kann auch über Farbveränderung einer Indikatorschicht auf dem Probenträger 23 durch eine Kammeröffnung erfolgen, beispielsweise über die Probengaszuführung.

Die vor der Desorption erfolgte Probenaufnahme über den Probenträger 23 erfolgt bevorzugt durch leichten Kontakt mit der zu untersuchende Oberfläche, wodurch Partikel an dem Probenträger 23 anhaften. Ebenfalls bevorzugt ist eine indirekte Übertragung der Probe mittels Hilfsvorrichtungen wie Pinsel oder durch Pipettieren in Flüssigkeit gelöster oder suspendierter Substanzen auf den scheibenförmigen oder tellerförmigen Probenträger 23. Wird die Substanz vor der Einführung oder auch im Desorber 1 zum Verdunsten gebracht, schlägt sich diese nieder oder kristallisiert. Eine weitere bevorzugte Möglichkeit einer Übertragung besteht in der Einbettung der Substanz in einer Paste, die dünn auf den Probenträger 23 aufgetragen wird und dort austrocknet oder härtet. Bei der Desorption diffundiert die Substanz aus der porösen bevorzugt temperaturstabilen Schicht.

Im Fall eines rein eisenhaltigen Probenträgers 23 wird dieser zum Schutz vor Oxidation (insbesondere in Kontakt mit Substanzen) besonders bevorzugt mit einer dünnen, chemisch inerten und hitzebeständigen Beschichtung passiviert. In einer Ausführungsform ist diese ein elektrischer Isolator, wie beispielsweise Emaille, mit einer relativen Permeabilität von ungefähr 1 und beeinflusst die magnetischen Eigenschaften des Probenträgers nicht. In einer weiteren Ausführungsform besteht die Beschichtung aus einer dünnen Schutzschicht aus Nickel. Auch diese wirkt sich nicht negativ auf die magnetischen Eigenschaften des Probenträgers 23 aus, da es für nicht allzu hohe Temperaturen (<Curie Temperatur) selbst ferromagnetisch ist.

Wegen der Wärmeleitungs- und Strahlungsverluste sollte der Magnetfeldübergangsbereich klein sein. Dieser Übergangsbereich ist sowohl spulenseitig als auch probenträgerseitig (keine Substanzaufnahmefläche) durch einen geringen Emissionsgrad für Wärmestrahlung gekennzeichnet. Insbesondere probenträgerseitig erreicht man dies bei metallischen Oberflächenbeschichtung bevorzugt bereits durch Polieren.

Um Ausgasungen der Spule 22 in den Gasraum zu vermeiden und andererseits, um zu verhindern, dass Probenbestandteile im Gas sich in der Spule 22 ablagern, wird diese durch eine Beschichtung 29 vom Gasraum getrennt. Die Oberfläche der Beschichtung 29 ist auf der Seite der wärmeisolierenden Gasschicht in Verbindung zum Probenträger 23 bevorzugt mit einer wärmereflektierenden Schicht versehen.

Die geometrische Form des Innenraums des Gehäuses, samt Spulenträger 21, Spule 22, Spalt 24 und Probenträger 23, bestimmt die Gesamtinduktivität und damit die Resonanzfrequenz. Sie ändert sich, wenn man den Probenträger 23 entfernt. Damit verbunden ist eine Änderung der Stromstärke bzw. eine Leistungsänderung. Dieser Umstand kann vorteilhaft ausgenutzt werden, um den Desorptionsvorgang mit Hilfe der elektronischen Steuer- und Regeleinheit 50 zu starten und die Entfernung des Probenträgers 23 zu detektieren. Wegen der sehr hohen Temperaturen des Probenträgers 23 ist bevorzugt eine gesteuerte Sicherheitssperre bzw. ein Riegel zur Entnahme des Probenträgers 23 über den Schließmechanismus des Desorbers 1 enthalten.

Der Probenträger 23 gelangt während des Verfahrens durch eine in der scheibenförmigen Ausführungsform nicht dargestellte schlitzförmige verschließbare Öffnung und in der zylindrischen Ausführungsform durch eine nicht dargestellte kreisförmige verschließbare Öffnung in den Innenraum des Desorbers 1, in der er durch stabile, aus festem Material bestehende, Abstandshalter 25 und Probenträgerhalter 26 fixiert wird. Um Wärmeleitungsverluste zu minimieren, ist der Gesamtquerschnitt der Abstandshalter 25 so gering wie möglich und umfasst schlecht wärmeleitendes Material wie Glas, Keramik oder Glaskeramik. Der Kontakt mit dem Probenträger 23 erfolgt in möglichst großer Distanz zur Wand. Kennzeichnend für die Erfindung ist, dass über die Abstandshalter 25 kein effektiver Energiefluss zum Probenträger 23 stattfindet, weder durch externe Wärmezufuhr noch durch elektrischen Stromfluss.

In den meisten Anwendungen ist das im Desorber 1 befindliche Gas Luft, die einen hohen Sauerstoffanteil besitzt. Um Oxidation und damit verbundene Zersetzungen der Substanzen insbesondere bei höheren Temperaturen zu vermeiden, wird der Innenraum des Desorbers 1 mit einem Inertgas wie Stickstoff oder mit Edelgasen wie Argon mittels der Probenträgergaspumpe 1 47 über den Probenträgergaseinlass 49 gefüllt. Bevorzugt erfolgt dies vor der Desorption bei niedriger Temperatur. Der Wechsel der mittels Pumpen geförderten Probenträgergasströme für die einzelnen Gase, beispielsweise zwischen der Luft und den Inertgasen, kann mittels der Ventile 46 oder über mehrere vorhandene Gaseingänge und - ausgänge und eine weitere Probenträgergaspumpe 2 48 am Gehäuse des Desorbers 1 erfolgen. Dabei erfolgt besonders bevorzugt ein gemeinsamer Abschnitt des Gasausganges am Gaseingang des lonenmobilitätsspektrometers vorbei, an welchem ein Gasaustausch durch ein Probengasaustauscher 44 in den Reaktionsraum 105 des lonenmobilitätsspektrometers 100 über Membrane 45 oder über einen Direkteinlass 45, bevorzugt über eine kleine Öffnung (Pinhole) 45, erfolgt. Nach dem Desorptionsvorgang, d. h. nach Beendigung des Heizvorgangs und mit Einsetzen des Abkühlens des Probenträgers 23, wird die Zufuhr des Inertgases wegen eventuell möglicher vorhandener Restsubstanzen bevorzugt erst ab einer vorgegebenen Temperatur beendet und durch Ventilumschaltung wieder Luft in die Kammer des Desorbers 1 geleitet.

Im Innenraum des dicht verschlossenen Desorbers 1 erfolgt mit der auf dem Probenträger 23 befindlichen nachzuweisenden Substanz der eigentliche Desorptionsprozess durch Erzeugung des hochfrequenten magnetischen Wechselfeldes mit Hilfe der durch die elektronische Steuer- und Regeleinheit 50 kontrollierten stromdurchflossenen Spule 22. Eine Sensorspule 53 ist angrenzend zur Spule 22 angeordnet, um der elektronischen Steuer- und Regeleinheit 50 Informationen über das magnetische Feld der Spule 22 bereitzustellen. Damit beim Desorptionsvorgang kein Probenmaterial in die Umgebung gelangen kann, ist das nicht dargestellte Gehäuse mit einer Schließvorrichtung ausgestattet. Durch ein oder mehrere ebenfalls nicht dargestellte Gaseinlässe gelangt der durch einen Pumpmechanismus (47, 48) beförderte Probenträgergasstrom, bevorzugt bestehend aus sauberem, trockenen Gas, in den Innenraum des Desorbers 1, der kennzeichnend für die Erfindung den Probenträger 23 samt Probe nahezu vollständig umströmt und so einen wärmeisolierenden Mantel um den Probenträger 23 bildet. Die den Probenträger 23 ummantelnde Probenträgergasströmung erfolgt mit minimalen Strömungswiderstand längst des Probenträgers 23. Bei einem scheibenförmigen Probenträger 23, der sich zwischen einem oder zwei mit einem Mittelloch versehenen Spulenträgern 21 befindet, erfolgt die Strömung bevorzugt axialsymmetrisch. In der Regel ist die Probenträgergasströmung kontinuierlich und gleichbleibend. Zum Abkühlen des Probenträgers 23 nach der Messung und zum Zwecke der Reinigung des Innenraumes des Desorbers 1 kann der Durchfluss bzw. Volumenstrom erhöht werden. Während des Desorptionsvorganges kann der Probenträgergasstrom moduliert werden. Dadurch kann bei ausbleibender oder verminderter Probenträgergasströmung für eine gewisse Zeit eine Substanzanreicherung in der Umgebung des Probenträgers 23 erreicht werden. Die erhöhte Probenträgergasströmung befördert die angereicherte Substanz dann in den Reaktionsraum des lonenmobilitätsspektrometers.

Durch bevorzugt einen oder auch mehrere Gasauslässe des Desorbers 1 gelangt das mit der Probe angereicherte Gas über den Probengaseinlass 106 in den Reaktionsraum 105 des lonenmobilitätspektrometers 100. Alternativ lässt sich das mit der Probe angereicherte Gas in die Umgebung ableiten, wobei der mit der Substanz angereicherte Probenträgergasstrom bevorzugt gefiltert und/oder durch Aktivkohle passiviert wird. Dies kann über einen parallelen Gasstrom erfolgen, der aus der Umgebung durch eine eingangsseitig zum Gehäuse angeordneten Pumpe angesaugt wird. Über diesen oder einen weiteren Gasauslass lässt sich nach dem Desorptionsvorgang der Probenträger 23 mit sauberem Gas reinigen und bei einem erhöhten Volumenstrom beschleunigt abkühlen.

Wegen der nahezu trägheitsfreien Erhöhung der Probenträgertemperatur lassen sich zunächst leicht flüchtige Substanzen wie Lösungsmittel oder Bindemittel, die als Begleitstoffe bei der Probenaufnahme in der Probe enthalten sein können, von den schwerflüchtigen Substanzen wie etwa Salzen chromatographisch trennen und im lonenmobilitätsspektrometer nachweisen oder im Bedarfsfall, um etwa eine "Überladung" bzw. Überproduktion hoch affiner Substanz-Ionen im Reaktionsraum zu verhindern, über die Umschaltvorrichtung ableiten, wodurch der Reaktionsraum bis zur Detektion der Zielsubstanzen bzw. Salze sauber bleibt.

Auch bei den schwerflüchtigen Salzen lässt sich eine weitere chromatographische Trennung etwa unter Berücksichtigung der möglichen Zersetzungstemperatur der zu erwartenden Substanzen bzw. Salze vornehmen.

Der Innenraum des Gehäuses des Desorbers 1 und die Gasauslässe werden zur Vermeidung von Anlagerungen und zur besseren Säuberung bevorzugt mit einer Passivschicht wie Teflon oder einer Silikat-Schicht geschützt. Vorteilhafterweise ist diese Schicht in der Desorberkammer zur Vermeidung starker Kontaminationen als dünner wärmereflektierender Einsatz 29 gestaltet, welcher sich aus der Kammer entfernen lässt.

Die bereits erwähnte elektronische Steuer- und Regeleinheit 50 wird in Figur 8 näher dargestellt. Sie umfasst einen zentralen Controller 54, der Messsignale in Form von einem Temperatursignal 51 des Desorbers und optional ein Detektorsignal 52 des Detektors 102 empfängt. Ferner weist die elektronische Steuer- und Regeleinheit 50 eine Sensorspule 53 zu Messung des magnetischen Feldes der Spule 22, die signalleitend mit dem Controller 54 verbunden ist. Weiterhin umfasst die elektronische Steuer- und Regeleinheit 50 einen Wechselschalter 55, der mit einer Strom- bzw. Spannungsquelle 58 sowie einem Kondensator 56 und der Spule 22 verbunden ist. Ein Widerstand 57 dient der Messung des Stroms, der durch die Spule 22 fließt.

Die induktive Erwärmung des Probenträgers 23 innerhalb des Verfahrens erfolgt geregelt und kann je nach Anwendungsfall und Ziel sowohl sprunghaft in kurzer Zeit, stufenweise oder nach einem vorgegebenen Zeitprofil bis zu einer Endtemperatur durch Steuerung mittels der elektronischen Steuer- und Regeleinheit 50 erfolgen. Die Zieltemperatur kann über die Frequenz des Wechselstroms in der Spule 22 und damit des effektiven magnetischen Flusses mittels des Controllers 54 eingestellt werden. Jedoch wird eine Temperatursteuerung durch Änderung der Stromstärkenamplitude bzw. der Magnetflussamplitude bevorzugt.

Bevorzugt erfolgt zusätzlich eine Überwachung des magnetischen Flusses, indem zusätzlich zur Spule 22 mindestens eine weitere Spulenwindung in den Spulenträger 21 einbracht wird, sodass der von der Spule 22 erzeugte magnetische Fluss umschlossen wird. Dies erfolgt hier über die Sensorspule 53. In der Kontrollwindung der Sensorspule 53 wird ein zu messender Wechselstrom induziert, der unter Kenntnis der Permeabilität des Probenträgermaterials, ein Maß für den magnetischen Fluss ist. Eine weitere bevorzugte Messung des magnetischen Flusses bzw. eines definierten Anteils erfolgt durch Hall-Effekt-Sensoren, die in den magnetischen Fluss des magnetfeldführenden Spulenträgers eingefügt werden.

Für den Wechselstrom durch die Spule 22 wird eine resonante Erzeugung bevorzugt, wobei die Induktivität des magnetischen Systems für jede einzelne Spule 22 unter Beteiligung des Probenträgers 23 die Kapazität des Kondensators 56 im Resonanzfall für eine gewählte Frequenz f im Bereich 25 kHz bis 500 kHz, z. B. 75kHz, bestimmt. Im einfachsten Fall wird über Wechselschalter 55 z. B. mit MOSFETs mit geringem Durchlasswiderstand in Halbbrückenschaltung eine erzwungene Schwingung im Schwingkreis bestehend aus Spule 22 und Kondensator 56 erzeugt. Die zuvor zur Messung des magnetischen Flusses erwähnte Spule 53 oder weitere können auch zur Erzeugung einer rückgekoppelten resonanten Schwingung verwendet werden. Hierzu kann der Stromfluss durch die Spule 22 durch eine analoge Ansteuerung über den Controller 54 gesteuert werden.

Zum Nachweis der desorbierenden Substanzen in Verbindung mit einem temperaturgesteuerten Temperaturprofil ist es vorteilhaft, wenn in einer Bibliothek oder Datenbank jeder dieser Substanzen die Verdampfungs- bzw. Sublimationsenthalpie und kritische Umwandlungstemperatur zugeordnet wird, nach der ein zu erwartender maximaler Partialdruck ermittelt werden kann. Bevorzugt wird eine experimentell ermittelte, optimale Probenträgertemperatur in der Bibliothek bzw. Datenbank gespeichert.

Auch wenn die Erfindung zahlreiche Maßnahmen zur Reduktion von Wärmeverlusten beschreibt, muss die zum Erhitzen des Probenträgers 23 nötige Wärme aus dem Desorber 1 abgeführt werden, da wichtige Systemkomponenten wie Spule 22 und Spulenträger 21 nur eine maximale Betriebstemperatur erlauben. Die sehr gut wärmeisolierende Gasschicht um den heißen Probenträger 23 ermöglicht es, die mit wesentlich höherer Wärmeleitfähigkeit beschaffenen Spulenkomponenten durch eine entsprechende Vorrichtung wie Kühlkörper effektiv zu kühlen. Bevorzugt bildet der nicht dargestellte Kühlkörper das umschließende dichtende Gehäuse und umfasst bevorzugt wärmeleitende Keramik. Da das Spulenträgermaterial nichtleitend ist, sind auch herkömmliche metallische Kühlkörper aus z. B. Aluminium geeignet. Besonders bevorzugt ist ein zweiteiliger Aufbau des Gehäuses aus Kühlkörper und wärmeisolierendem Gehäusematerial im Magnetfeldübergangsbereich für die Halterungen des Probenträgers 23.

### Bezugszeichenliste

- 1: Desorber
- 11: Desorbergehäuse
- 2: Induktionseinheit
- 21: Spulenträger
- 22: Spule
- 23: Probenträger
- 231: Kern
- 232: wärmereflektierende/inerte Beschichtung
- 233: Probenträgerschicht
- 2331: mechanisch strukturierende Schicht
- 2332: Widerstandsschicht
- 2333: katalytische Schicht
- 2334: Inertschicht
- 24: Spalt
- 25: Abstandshalter
- 26: Probenträgerhalter
- 260: Wärmebrücke
- 261: kontaktierender Temperatursensor
- 262: berührungsloser Temperatursensor
- 27: Signalleitung
- 28: Klammer
- 29: Beschichtung
- 31: Beschichtung A
- 32: Beschichtung B
- 41: Drosselventil
- 42: Reaktionsraumgaseingang
- 43: Probenträgergasausgang
- 44: Probengasaustauscher
- 45: Membran/Pinhole/Direkteinlass
- 46: Ventil/Absperrventil
- 47: Probenträgergaspumpe 1
- 48: Probenträgergaspumpe 2
- 49: Probenträgergaseinlass
- 50: elektronische Steuer- / Regeleinheit
- 51: Temperatursignal
- 52: Detektorsignal
- 53: Sensorspule
- 54: Controller
- 55: Wechselschalter
- 56: Kondensator
- 57: Widerstand (Shunt, Stromsensor)
- 58: regelbare Strom- bzw. Spannungsquelle
- 100: IMS
- 101: Schaltgitter
- 102: Ionendetektor
- 103: Driftgas
- 104: Driftraum
- 105: Reaktionsraum
- 106: Probengaseinlass des Spektrometers
- 107: Gasauslass
- 108: Probengas
- 109: lonisierungsquelle
- 110: Driftgaspumpe
- 111: Trockenfilter

## Patentansprüche

1. Desorber (1) für ein Spektrometer, umfassend ein Gehäuse, das Zu- und Ableitungen für ein Probenträgergas (3) sowie eine verschließbare Öffnung aufweist, und eine in dem Gehäuse angeordnete Induktionseinheit (2), wobei die Induktionseinheit (2) umfasst:
- einen elektrisch isolierenden Spulenträger (21), der eine relative Permeabilität von mehr als 10 aufweist,
- eine in dem Spulenträger (21) angeordnete Spule (22),
- einen über die verschließbare Öffnung entnehmbaren Probenträger(23), wobei der Probenträger (23) eine relative Permeabilität von mehr als 10 aufweist und als induktives Heizelement ausgebildet ist, um eine auf den Probenträger (23) aufgebrachte, zu desorbierende Substanz zu erhitzen, und der Spulenträger (21) und die Spule (22) durch einen Spalt (24) von dem Probenträger (23) beabstandet angeordnet sind, so dass der durch einen in der Spule (22) fließenden Wechselstrom erzeugte magnetische Fluss über den Spulenträger (21) und den Spalt (24) durch den Probenträger (23) fließt.

2. Desorber (1) nach Anspruch 1, **dadurch gekennzeichnet, dass** der Desorber (1) eine elektronische Steuer- und Regeleinheit (50) umfasst, die zur Steuerung der induktiven Erwärmung durch Variation des Wechselstroms ausgebildet ist, wobei die Steuerung in Abhängigkeit eines Ziel-Temperaturprofils des Probenträgers (23) erfolgt.

3. Desorber (1) nach einem der vorhergehenden Ansprüche, **dadurch gekennzeichnet, dass** die Induktionseinheit (2) mindestens einen Abstandshalter (25), wobei der mindestens eine Abstandshalter (25) ausgebildet ist, den Probenträger (23) zu halten und einen Breite des Spalts (24) variabel einzustellen, umfasst, wobei der Spalt (24) eine Breite von mehr als 0,1 mm und weniger als 1 mm aufweist.

4. Desorber (1) nach einem der vorhergehenden Ansprüche, **dadurch gekennzeichnet, dass** der Spulenträger (21) eine relative Permeabilität von mehr als 100 und weniger als 15000 aufweist.

5. Desorber (1) nach einem der vorhergehenden Ansprüche, **dadurch gekennzeichnet, dass** die Induktionseinheit (2) einen Temperatursensor (26) umfasst, der ausgebildet ist, die Temperatur des Probenträgers (23) zu erfassen.

6. Desorber (1) nach einem der vorhergehenden Ansprüche, **dadurch gekennzeichnet, dass** der Spulenträger (21) den gesamten Probenträger (23) überdeckt.

7. Desorber (1) nach einem der vorhergehenden Ansprüche, **dadurch gekennzeichnet, dass** der Spulenträger (21) eine Schalen- und/oder Topf-Form aufweist, die zur Aufnahme der Spule (22) ausgebildet ist.

8. Desorber (1) nach einem der vorhergehenden Ansprüche, **dadurch gekennzeichnet, dass** das Gehäuse auf der der Induktionseinheit (2) zugewandten Seite eine inerte, wärmereflektierende Beschichtung aufweist.

9. Desorber (1) nach Anspruch 7, **dadurch gekennzeichnet**, das Gehäuse mit einem Gas befüllt ist, wobei das Gas während einer Desorption ein inertes Gas, insbesondere Stickstoff, oder ein Edelgas, insbesondere Argon, ist und ansonsten Luft.

10. Desorber (1) nach einem der vorhergehenden Ansprüche, **dadurch gekennzeichnet, dass** der Probenträger (23) eine Probenkontaktzone umfasst, die Strukturmerkmale und/oder Strukturierungen zur Oberflächenvergrößerung mit möglichst keiner oder nur geringer Volumenvergrößerung, die eine reaktionskatalytische Beschichtung und/oder die eine chemische inerte Beschichtung aufweist.

11. Desorber (1) nach einem der vorhergehenden Ansprüche, **dadurch gekennzeichnet, dass** die Oberfläche des Probenträgers (23) einen Emissionsgrad unter 0,1 aufweist.

12. Desorber (1) nach einem der vorhergehenden Ansprüche, **dadurch gekennzeichnet, dass** der Probenträger (23) als Scheibe, Rohr oder Stift ausgeführt ist.

13. Desorber (1) nach einem der vorhergehenden Ansprüche, **dadurch gekennzeichnet, dass** das Verhältnis aus Schichtdicke D des Probenträgers (23) und Eindringtiefe δ größer als 2 und kleiner als 10 ist.

14. lonenmobilitätsspektrometer (100), zum Ermitteln einer lonenmobilität einer Probe, aufweisend:
- einen zum Transport von Ionen von einem Schaltgitter (101) zu einem Ionendetektor (102) entgegen einer axialen Driftgasströmung (103) ausgebildeten zylindrischen Driftraum (104),
- einen an den Driftraum (104) in axialer Richtung angrenzenden zylindrischen Reaktionsraum (105) mit einem zu dem Schaltgitter (101) benachbarten Probengaseinlass (106) zum Einleiten eines Probengases (108),
- einem dem Schaltgitter (101) gegenüberliegenden Gasauslass (107) zum Ableiten von Driftgas (103) und von Probengas (108),
- einer am Gasauslass (107) angeordneten lokalen lonisierungsquelle (109), und
- einen Desorber (1) nach einem der Ansprüche 1 bis 13.

15. Verfahren zur Desorption mittel- und schwerflüchtiger Substanzen, die bei Temperaturen über 250° C desorbieren, und Bereitstellung der desorbierten Substanzen in einem lonenmobilitätsspektrometer (100) mit einem Desorber (1) nach einem der Ansprüche 1 bis 13, wobei das Verfahren folgende Schritte umfasst:
- Einführen des mit einer Substanz beladenen Probenträgers (23) über die verschließbare Öffnung in den Desorber (1);
- Induktives Erhitzen des Probenträgers (23) mittels eines durch einen in der Spule (22) fließenden Wechselstrom erzeugten, hochfrequenten, magnetischen Wechselfelds;
- Zuführen der desorbierten Probe mittels der Strömung eines dem Desorber (1) über die Zuleitungen zugeführten und über den Probenträger (23) geleiteten Probenträgergasstroms über die Ableitungen direkt oder indirekt über einen Probengasaustauscher in den Reaktionsraum (105) des lonenmobilitätsspektrometers (100);
- Ionisieren der desorbierten Probe mittels einer lonisierungsquelle (109);
- Messen eines durch ein elektrisches Driftfeld erzeugten lonenstroms des ionisierten Probengases mit einem Ionendetektor (102) und Auswerten eines entstehenden Signals.

## Claims

1. A desorber (1) for a spectrometer, comprising a housing which has inlets and outlets for a sample carrier gas (3) and a closable opening, and an induction unit (2) arranged in the housing, wherein the induction unit (2) comprises:
- an electrically insulating coil carrier (21) which has a relative permeability of more than 10,
- a coil (22) arranged in the coil carrier (21),
- a sample carrier (23) which can be removed via the closable opening,
wherein the sample carrier (23) has a relative permeability of more than 10 and is formed as an inductive heating element in order to heat a substance to be desorbed which is applied to the sample carrier (23), and the coil carrier (21) and the coil (22) are arranged spaced apart from the sample carrier (23) by a gap (24), so that the magnetic flux generated by an alternating current flowing in the coil (22) flows through the sample carrier (23) via the coil carrier (21) and the gap (24).

2. The desorber (1) according to Claim 1, **characterized in that** the desorber (1) comprises an electronic control and regulating unit (50) which is formed to control inductive heating by varying the alternating current, wherein the control is carried out as a function of a target temperature profile of the sample carrier (23).

3. The desorber (1) according to any one of the preceding claims, **characterized in that** the induction unit (2) comprises at least one spacer (25), wherein the at least one spacer (25) is formed to hold the sample carrier (23) and to variably adjust a width of the gap (24), wherein the gap (24) has a width of more than 0.1 mm and less than 1 mm.

4. The desorber (1) according to any one of the preceding claims, **characterized in that** the coil carrier (21) has a relative permeability of more than 100 and less than 15000.

5. The desorber (1) according to any one of the preceding claims, **characterized in that** the induction unit (2) comprises a temperature sensor (26), which is formed to detect the temperature of the sample carrier (23).

6. The desorber (1) according to any one of the preceding claims, **characterized in that** the coil carrier (21) covers the entire sample carrier (23).

7. The desorber (1) according to any one of the preceding claims, **characterized in that** the coil carrier (21) is in the shape of a bowl and/or pot, which is formed to receive the coil (22).

8. The desorber (1) according to any one of the preceding claims, **characterized in that** the housing has an inert, heat-reflecting coating on the side facing the induction unit (2).

9. The desorber (1) according to Claim 7, **characterized in that** the housing is filled with a gas, wherein, during desorption, the gas is an inert gas, in particular nitrogen, or a noble gas, in particular argon, and otherwise air.

10. The desorber (1) according to any one of the preceding claims, **characterized in that** the sample carrier (23) comprises a sample contact zone, which has structural features and/or structures for enlarging the surface with as little as possible or no increase in volume which has a reaction-catalytic coating and/or a chemically inert coating.

11. The desorber (1) according to any one of the preceding claims, **characterized in that** the surface of the sample carrier (23) has an emissivity of below 0.1.

12. The desorber (1) according to any one of the preceding claims, **characterized in that** the sample carrier (23) is formed as a disc, tube or pin.

13. The desorber (1) according to any one of the preceding claims, **characterized in that** the ratio of layer thickness D of the sample carrier (23) to penetration depth is greater than 2 and lower than 10.

14. An ion mobility spectrometer (100), for determining an ion mobility of a sample, comprising:
- a cylindrical drift chamber (104) formed for transporting ions from a switching grid (101) to an ion detector (102) against an axial drift gas flow (103),
- a cylindrical reaction chamber (105) adjoining the drift chamber (104) in axial direction with a sample gas inlet (106) adjacent to the switching grid (101) for introducing a sample gas (108),
- a gas outlet (107) opposite the switching grid (101) for discharging drift gas (103) and sample gas (108),
- a local ionisation source (109) arranged at the gas outlet (107), and
- a desorber (1) according to any one of Claims 1 to 13.

15. A method for desorbing medium and low volatile substances, which desorb at temperatures above 250°C, and providing the desorbed substances in an ion mobility spectrometer (100) with a desorber (1) according to any one of Claims 1 to 13, wherein the method comprises the following steps:
- introducing the sample carrier (23) charged with a substance into the desorber (1) via the closable opening;
- inductively heating the sample carrier (23) by means of a high-frequency, magnetic alternating field generated by an alternating current flowing in the coil (22);
- feeding the desorbed sample into the reaction chamber (105) of the ion mobility spectrometer (100) by means of the flow of a sample carrier gas flow fed into the desorber (1) via the feed lines and channelled via the sample carrier (23) via the discharge lines directly or indirectly via a sample gas exchanger;
- ionising the desorbed sample by means of an ionisation source (109);
- measuring an ion current of the ionised sample gas generated by an electric drift field with an ion detector (102) and evaluating a resulting signal.

## Revendications

1. Désorbeur (1) pour un spectromètre, comprenant un boîtier qui présente des conduites d'amenée et d'évacuation pour un gaz porteur d'échantillon (3) ainsi qu'une ouverture pouvant être fermée, et une unité d'induction (2) agencée dans le boîtier, l'unité d'induction (2) comprenant :
- un support de bobine électriquement isolant (21), qui présente une perméabilité relative supérieure à 10,
- une bobine (22) agencée dans le support de bobine (21),
- un support d'échantillon (23) pouvant être retiré par le biais de l'ouverture pouvant être fermée, le support d'échantillon (23) présentant une perméabilité relative supérieure à 10 et étant configuré sous forme d'élément chauffant inductif pour chauffer une substance à désorber appliquée sur le support d'échantillon (23), et le support de bobine (21) et la bobine (22) étant agencés espacés du support d'échantillon (23) par un interstice (24), de telle sorte que le flux magnétique généré par un courant alternatif circulant dans la bobine (22) circule par le biais du support de bobine (21) et de l'interstice (24) à travers le support d'échantillon (23).

2. Désorbeur (1) selon la revendication 1, **caractérisé en ce que** le désorbeur (1) comprend une unité de commande et de régulation électronique (50) qui est configurée pour commander le chauffage inductif par variation du courant alternatif, la commande étant effectuée en fonction d'un profil de température cible du support d'échantillon (23).

3. Désorbeur (1) selon l'une quelconque des revendications précédentes, **caractérisé en ce que** l'unité d'induction (2) comprend au moins une entretoise (25), l'au moins une entretoise (25) étant configurée pour maintenir le support d'échantillon (23) et pour ajuster de manière variable une largeur de l'interstice (24), l'interstice (24) présentant une largeur supérieure à 0,1 mm et inférieure à 1 mm.

4. Désorbeur (1) selon l'une quelconque des revendications précédentes, **caractérisé en ce que** le support de bobine (21) présente une perméabilité relative supérieure à 100 et inférieure à 15 000.

5. Désorbeur (1) selon l'une quelconque des revendications précédentes, **caractérisé en ce que** l'unité d'induction (2) comprend un capteur de température (26) qui est configuré pour détecter la température du support d'échantillon (23).

6. Désorbeur (1) selon l'une quelconque des revendications précédentes, **caractérisé en ce que** le support de bobine (21) recouvre la totalité du support d'échantillon (23).

7. Désorbeur (1) selon l'une quelconque des revendications précédentes, **caractérisé en ce que** le support de bobine (21) présente une forme de cuvette et/ou de pot qui est configurée pour recevoir la bobine (22).

8. Désorbeur (1) selon l'une quelconque des revendications précédentes, **caractérisé en ce que** le boîtier présente un revêtement inerte réfléchissant la chaleur sur le côté tourné vers l'unité d'induction (2).

9. Désorbeur (1) selon la revendication 7, **caractérisé en ce que** le boîtier est rempli d'un gaz, le gaz étant un gaz inerte, notamment de l'azote, ou un gaz rare, notamment de l'argon, pendant une désorption, et sinon de l'air.

10. Désorbeur (1) selon l'une quelconque des revendications précédentes, **caractérisé en ce que** le support d'échantillon (23) comprend une zone de contact avec l'échantillon qui présente des caractéristiques structurelles et/ou des structurations pour l'augmentation de la surface avec une augmentation de volume aussi faible que possible ou nulle, qui présente un revêtement catalytique de réaction et/ou qui présente un revêtement chimique inerte.

11. Désorbeur (1) selon l'une quelconque des revendications précédentes, **caractérisé en ce que** la surface du support d'échantillon (23) présente un degré d'émission inférieur à 0,1.

12. Désorbeur (1) selon l'une quelconque des revendications précédentes, **caractérisé en ce que** le support d'échantillon (23) est réalisé sous forme de disque, de tube ou de tige.

13. Désorbeur (1) selon l'une quelconque des revendications précédentes, **caractérisé en ce que** le rapport entre l'épaisseur de couche D du support d'échantillon (23) et la profondeur de pénétration δ est supérieur à 2 et inférieur à 10.

14. Spectromètre de mobilité ionique (100) pour déterminer une mobilité ionique d'un échantillon, présentant :
- un espace de dérive cylindrique (104) configuré pour transporter des ions d'une grille de commutation (101) à un détecteur d'ions (102) à l'encontre un écoulement axial de gaz de dérive (103),
- un espace de réaction cylindrique (105) adjacent à l'espace de dérive (104) dans la direction axiale, avec une entrée de gaz échantillon (106) voisine de la grille de commutation (101) pour amener un gaz échantillon (108),
- une sortie de gaz (107) opposée à la grille de commutation (101) pour évacuer le gaz de dérive (103) et le gaz échantillon (108),
- une source d'ionisation locale (109) agencée à la sortie de gaz (107), et
- un désorbeur (1) selon l'une quelconque des revendications 1 à 13.

15. Procédé de désorption de substances moyennement et peu volatiles qui se désorbent à des températures supérieures à 250 °C et de fourniture des substances désorbées dans un spectromètre de mobilité ionique (100) avec un désorbeur (1) selon l'une quelconque des revendications 1 à 13, le procédé comprenant les étapes suivantes :
- l'introduction du support d'échantillon (23) chargé d'une substance dans le désorbeur (1) par le biais de l'ouverture pouvant être fermée ;
- le chauffage par induction du support d'échantillon (23) au moyen d'un champ magnétique alternatif à haute fréquence généré par un courant alternatif circulant dans la bobine (22) ;
- l'acheminement de l'échantillon désorbé dans la chambre de réaction (105) du spectromètre de mobilité ionique (100) au moyen de l'écoulement d'un courant de gaz porteur d'échantillon acheminé vers le désorbeur (1) par le biais des conduites d'amenée et guidé sur le support d'échantillon (23), par le biais des conduites d'évacuation, directement ou indirectement par le biais d'un échangeur de gaz échantillon ;
- l'ionisation de l'échantillon désorbé au moyen d'une source d'ionisation (109) ;
- la mesure d'un courant ionique du gaz échantillon ionisé, généré par un champ électrique de dérive, avec un détecteur d'ions (102) et l'évaluation d'un signal résultant.
